# EUROPÄISCHE PATENTSCHRIFT

(11) **EP 3 256 541 B1**
(45) Veröffentlichungstag und Bekanntmachung des Hinweises auf die Patenterteilung: **16.11.2022**
(21) Anmeldenummer: 16704603.6
(22) Anmeldetag: 12.02.2016
(51) Int. Cl.: C09K 3/10

(54) **VERFAHREN ZUM AUFTRAGEN EINER SCHWEFEL-HALTIGEN DICHTMASSE, VORRICHTUNG HIERZU, UND SEINE VERWENDUNG**
METHOD OF APPLYING A SULPHUR-CONTAINING SEALING COMPOUND, APPARATUS THEREFOR, AND USE THEREOF
PROCÉDÉ POUR L'APPLICATION D'UNE MASSE D'ÉTANCHÉITÉ CONTENANT DU SOUFRE, DISPOSITIF À CET EFFET, ET SON UTILISATION

(30) Priorität: 13.02.2015 DE 102015202619
(43) Veröffentlichungstag der Anmeldung: 20.12.2017
(73) Patentinhaber: Chemetall GmbH, 60487 Frankfurt am Main (DE)
(72) Erfinder: BONS, Peter, 61203 Reichelsheim (DE); REICHERT, Swetlana, 60316 Frankfurt am Main (DE); SIEVERS, Björn, 60326 Frankfurt (DE); KRALEV, Miroslav, 63456 Hanau (DE)
(74) Vertreter: BASF IP Association
(86) Internationale Anmeldenummer: PCT/EP2016/053005
(87) Internationale Veröffentlichungsnummer: WO 2016/128547

(56) Entgegenhaltungen:
- WO-A1-2014/066039
- DE-A1-102012 205 951
- US-A1- 2013 137 817

## Beschreibung

Die Erfindung betrifft ein Verfahren gemäß Anspruch 1, entsprechende Vorrichtung gemäß Anspruch 20 und die Verwendung jenes Verfahrens und jener Vorrichtung gemäß Anspruch 26.

Dichtmassen haben in der Luft- und Raumfahrt die Aufgaben, Oberflächen von Bauteilen insbesondere gegen Luft, Wasser oder/und Treibstoff abzudichten, hierdurch auch einen Korrosionsschutz zu ermöglichen und äußere Oberflächen von Bauteilen aerodynamisch zu glätten, um den Luftwiderstand z.B. an Tragflächen und Rumpf möglichst zu minimieren.

Eine abzudichtende Oberfläche insbesondere an einem Bauteil der Luft- und Raumfahrt weist bei der Herstellung des Bauteils mindestens ein aus der Oberfläche hervorstehendes Verbindungselement wie z.B. im Wesentlichen mindestens jeweils einen Bolzen, eine Niete, eine Schraube, einen Gewindestift, eine Mutter, einen Stift oder ein hierzu ähnlich geformtes hervorstehendes Verbindungselement, mindestens einen Spalt wie z.B. im Wesentlichen ein Leck, ein Loch, eine Naht, eine Fuge oder eine Kontaktstelle zwischen mehreren Konstruktionselementen oder/und mindestens eine unebene Verbindungsstelle wie z.B. im Wesentlichen eine Falznaht, eine Klebestelle, eine Schweißstelle, eine Schweißnaht oder/und eine Unebenheit auf. Die Verbindungsstelle wird nach dem Setzen der Verbindung Applikationsstelle genannt, da hier eine Abdichtung mit einer Dichtmasse als Dichtmassenüberzug aufgebracht (appliziert) wird.

Die im Markt für Dichtmassen für den Einsatz in der Luft- und Raumfahrt verwendeten Dichtmassen und Auftragsverfahren haben den Nachteil eines besonders langen Behandlungsverfahrens, um beispielsweise Bolzen, Nieten, Nähte und Schweißnähte mit einer auch nach wechselnden Belastungen gut haftenden treibstoffbeständigen Dichtmasse abzudichten. Wenn daher Bauteile mit z.B. 20, 200 oder sogar mehreren tausend einzelnen Applikationsstellen, an denen z.B. ein Bolzen oder eine Niete gesetzt und danach abgedichtet werden soll wie z.B. bei einem Flugkörperrumpf oder bei einer Tragfläche, dann sind vor allem die Schritte der durch mechanische Herstellung von präzise lokalisierten Bohrungen für die Verbindungsstellen, das Verbinden z.B. mit Bolzen oder Nieten, die Herstellung der Abdichtungen an Applikationsstellen und die damit verbundenen Wartezeiten bis zum Beginn des nächsten Prozessschritts die geschwindigkeitsbestimmenden Schritte. Der nächste Prozessschritt kann dann beispielsweise ein Betreten oder Bewegen des Bauteils oder eine weitere mechanische Bearbeitung wie z.B. weiteres Bohren an dem Bauteil sein.

Ein wesentlicher geschwindigkeitsbestimmender Schritt ist die Wartezeit bis zur Klebfreiheit der Dichtmasse an mindestens einer Applikationsstelle, da während dieser Zeit Bohrspäne und Schmutz an dem klebrigen Dichtmassenüberzug anhaften können. Diese Wartezeit bis zur Klebfreiheit der Dichtmasse an mindestens einer Applikationsstelle beginnt häufig mit dem Entfernen von mindestens einer Einheit oder/und von einem Werkzeug zum Setzen oder/und Befestigen von mindestens einem Verbindungselement z.B. beim Nieten oder/und Schrauben oder/und mit dem Bewegen von mindestens einem Düsenelement auf die mindestens eine dann zu behandelnde Applikationsstelle. Diese Wartezeit bis zur Klebfreiheit der Dichtmasse an mindestens einer Applikationsstelle umfasst das Aufbringen von angemischter oder/und teilweise unausgehärteter Dichtmasse auf mindestens eine Applikationsstelle sowie gegebenenfalls auch das Formen von mindestens einem Dichtmassenüberzug im Wesentlichen auf mindestens eine Endform, die unabhängig voneinander vorzugsweise näherungsweise die Form einer Beschichtung, Glocke, Kappe oder/und einer hügelförmigen oder raupenförmigen Anhebung auf der Oberfläche bildet, oder/und das Abheben oder/und Wegbewegen von mindestens einem Düsenelement oder von mindestens einem Teil von mindestens einem Düsenelement von der Oberfläche von mindestens einem Dichtmassenüberzug. Diese Wartezeit bis zur Klebfreiheit der Dichtmasse an mindestens einer Applikationsstelle umfasst auch die Initiierung der Aushärtung der applizierten Dichtmasse (des Dichtmassenüberzugs) durch Energieeintrag wie z.B. durch Bestrahlen mit UV-Licht, wie z.B. durch Freisetzen eines latenten Katalysators und die Aushärtung der applizierten Dichtmasse etwa bis zur Klebfreiheit, wobei diese letzte Zeit auch als "tack-free-time" bekannt ist. Diese Wartezeit bis zur Klebfreiheit der Dichtmasse an mindestens einer Applikationsstelle endet vorzugsweise beim Erreichen der oberflächlichen Klebfreiheit des mindestens einen Dichtmassenüberzugs und ist häufig eine Voraussetzung für das Bewegen des Bauteils oder/und anderweiten mechanischen Bearbeiten, zum Säubern von mindestens einer Einheit oder/und von einem Werkzeug, zum Setzen oder/und Befestigen von mindestens einem Verbindungselement z.B. beim Nieten oder/und Schrauben.

Erst eine SCOD-Dichtmasse (SCOD = Sealant Cure on Demand) erlaubt eine drastische Beschleunigung der Dichtmassen-Aushärtung zum gewünschten Startzeitpunkt und ermöglicht eine Klebfreiheit oder/und eine Shore A-Härte z.B. von 30 in kürzester Zeit.

Im Sinne dieser Anmeldung wird eine einkomponentige Dichtmasse ebenfalls als "angemischt" angesehen, wenn - was üblich ist - und weil die enthaltenen Komponenten homogen verteilt enthalten sind.

Das Bohren, Verbinden und Abdichten von z.B. 100 derartigen Verbindungsstellen erfordert heute jedoch z.B. auf einer Tragfläche mehrere Stunden, was den Bau derartiger Flugkörper erheblich beeinträchtigt, da ein großes Flugzeug wie z.B. der Airbus A380 in der Größenordnung von 1.000.000 einzelner Verbindungsstellen aufweist. Die Zahl der einzelnen Verbindungsstellen je Oberfläche eines Bauteils hängt sehr von der Art des Bauteils ab. Ziel ist es jedoch, in allen Bereichen die Taktzeiten zu verkürzen und insbesondere die oben genannte Wartezeit bis zur Klebfreiheit der Dichtmasse an mindestens einer Applikationsstelle zu verkürzen. Daher ist es ein wesentliches Ziel bei der Herstellung von Flugkörpern, die Herstellverfahren zu beschleunigen, ohne die hohen Anforderungen an den Bau und die langlebige Qualität der Bauteile zu beeinträchtigen.

Bisher werden die Verbindungsstellen an Bauteilen der Luft- und Raumfahrt immer noch in erheblichem Umfang von Hand hergestellt, was einen sehr erheblichen Zeitaufwand bei der Herstellung z.B. eines Flugzeuges erfordert. Denn hierzu werden in sehr großer Zahl präzise positionierte Bohrungen hergestellt, mit Bolzen, Schrauben oder/und ähnlichen Verbindungselementen versehen und mit Dichtmasseüberzügen abgedichtet, um einen Verbund z.B. von verschiedenen Bauteilen zu schaffen, z.B. den Verbund zwischen einem Tank und den Außenflächen eines Flügels. Ähnliches gilt für die flächige Abdichtung von aneinander grenzenden Elementen oder Bauteilen durch einen Dichtmassenüberzug, der üblicherweise in erheblichem Umfang von Hand hergestellt wird und bei dem oft zumindest eine kleine äußere Fläche des Dichtmassenüberzugs vom Äußeren des Bauteils zugänglich ist.

Hierzu wird häufig eine Kartusche mit zwei getrennten Kammern, die mit der Grundmasse und dem Härter getrennt gefüllt sind, verwendet. Der Kartuscheninhalt wird dann zusammengeführt und homogen gemischt. Diese Menge an angemischter Dichtmasse wird dann verwendet, um dann die Dichtmassenüberzüge üblicherweise von Hand aufzutragen, wobei im Wesentlichen punktuell (z.B. über einem Bolzen oder über einer Schraube), linear (z.B. als Dichtmassenraupe) oder flächig (z.B. mit einer Zwischenlagendichtmasse zwischen zwei Bauteilen) gearbeitet wird.

Beim Auftrag einer Dichtmasse an einer Applikationsstelle gilt es, das üblicherweise von Hand geführte Düsenelement möglichst zentrisch über das aus einer Oberfläche hervorstehende Verbindungselement zu positionieren und die erforderliche Menge an Dichtmasse aufzutragen, ohne dass zu viel oder zu wenig aufgebracht wird, ohne dass der Dichtmassenüberzug zu dünn (z.B. Wandung an mindestens einer Stelle des Überzugs z.B. über einer hervorstehenden Verbindungsstelle dünner als 0,5 mm) über dem Verbindungselement wird und dann nicht ausreichend dichtend ist, ohne dass der Dichtmassenüberzug stark azentrisch aufgetragen wird und ohne dass die Form des Dichtmassenüberzugs sehr unregelmäßig wird. Nachteilig bei der manuellen Applikation ist auch die wenig reproduzierbare Form und Größe des Dichtmasseüberzugs. Einige Verfahren und Vorrichtungen zum Beschichten der Oberflächen mit einer Dichtmasse werden in DE 10 2012 205951, US 2013/137817 A1 und WO 2014/066039 A1 offenbart.

In einem alternativen Herstellungsverfahren nach US 7,438,974 B2 werden die Dichtmassenüberzüge portioniert, insbesondere in Form von Hütchen vorgeformt, mit einer ungehärteten Dichtmasse gefüllt und eingefroren. Vor der Applikation erreichen diese Vorformlinge dann Zimmertemperatur. Das Verfahren erfordert die Verdrängung von jeglicher Luft aus dem Hütchen während des Aufsetzens auf das Verbindungselement. Dies kann nur durch Ausquetschen von überschüssiger Dichtmasse und Drehen des Hütchens gewährleistet werden, wobei die überschüssige nicht-ausgehärtete Dichtmasse an der Basisfläche des Dichtmassenüberzugs wie z.B. an der Hütchenbasis oft einen unerwünschten und anfangs klebrigen Dichtmassenwulst bildet.

Auch dieses Verfahren ist sehr zeitaufwändig und könnte durch den Einsatz einer sogenannten SCOD-Dichtmasse entscheidend verbessert werden: Hierbei könnte dann ein im Vergleich zu der Erfindung modifiziertes Verfahren mit einer modifizierten Vorrichtung eingesetzt werden, bei dem an einer Applikationsstelle mindestens ein vorgeformtes Dichtmassenhütchen, das mit einer nicht ausgehärteten SCOD-Dichtmasse gefüllt ist, z.B. mit einer Auftragseinheit mit einem Greifer oder/und Halter anstelle eines Düsenelements aufgebracht wird, bei dem das vorgeformte Dichtmassenhütchen an der Applikationsstelle gegebenenfalls ausgequetscht wird, bei dem die nicht ausgehärtete SCOD-Dichtmasse oder/und gegebenenfalls die an der Basis eines aufgebrachten vorgeformten Dichtmassenhütchens ausgequetschte nicht ausgehärtete SCOD-Dichtmasse durch eine gegebenenfalls von einer Auftragseinheit mitgeführte Bestrahlungseinheit bestrahlt und zur beschleunigten Aushärtung angeregt oder/und gebracht wird. Bisher ist dem im Luftfahrtbereich sehr erfahrenen Anmelder keine Anwendung einer Dichtmasse auf Basis von Polythioether oder/und Polysulfid in der Praxis bei der Flugzeugherstellung bekannt, bei der eine entsprechend geeignete Dichtmasse aufgrund von Energieeintrag durch Einstrahlung von UV-Licht mit Wellenlängen etwa im Bereich von 100 bis 400 nm oder von UV-VIS-Licht mit Wellenlängen etwa im Bereich von 300 bis 600 nm zur Härtung angeregt wird.

Es wurde gefunden, dass eine sehr erhebliche Zeitersparnis bei der Herstellung z.B. von Luft- und Raumfahrzeugen erzielt werden kann, wenn einerseits ein automatisierbarer Dichtmassenauftrag oder/und eine teilweise oder vollständige Automatisierung des Dichtmassenauftrags an den Applikationsstellen oder/und der Positionierung einer Bestrahlungseinheit für die Anregung des Aushärtens eines applizierten Dichtmassenüberzugs auf Befehl ("on demand") erfolgt und wenn die applizierte Dichtmasse hierzu so ausgewählt wird, dass in kürzester Zeit Klebfreiheit oder/und eine Shore A-Härte z.B. von 30 erreicht wird, so dass mit der Applikation verbundene Wartezeiten und auch die gesamte Herstellungszeit um einen größeren Faktor verringert werden im Vergleich zu einer Herstellung von abgedichteten Verbindungsstellen in erheblichem Umfang von Hand mit einer konventionell und langsam härtenden Dichtmasse.

Es wird angenommen, dass die mit einem erfindungsgemäßen Verfahren und mit mindestens einer erfindungsgemäßen Vorrichtung erzielbare Zeitersparnis gegenüber der heute üblichen Fertigungszeit für die jeweiligen Arbeitsschritte bei konventioneller Fertigung im erheblichen Umfang von Hand mit einer konventionell eingesetzten und nicht durch Energieeintrag zur Aushärtung angeregten Dichtmasse im Bereich von 10 bis 50 % je nach dem Bauteil, den Anforderungen und den jeweiligen Verfahrensbedingungen und ihrer Automatisierung liegt.

Erst durch eine Kombination eines automatisierbaren oder automatischen Auftrags einer Dichtmasse als Dichtmassenüberzug und der Auswahl einer Dichtmasse, die in kürzester Zeit Klebfreiheit oder/und eine Shore A-Härte z.B. von 30 erreicht, lässt sich eine drastische Zeiteinsparung bei der Herstellung von Bauteilen mit vielen Applikationsstellen = Verbindungsstellen erzielen. Das SCOD-Prinzip (SCOD = Sealant Cure on Demand) erlaubt eine drastische Beschleunigung der Dichtmassen-Aushärtung zum gewünschten Startzeitpunkt und ermöglicht somit erst die Klebfreiheit oder/und eine Shore A-Härte z.B. von 30 in kürzester Zeit, weil alle für die Aushärtung relevanten Zeiten in engem Zusammenhang stehen, wie Tabelle 2 zeigt, so dass die Dichtmasse üblicherweise erst auf Befehl zu härten beginnt und mit diesem Befehl durch Energieeintrag eine Initiierung oder Aktivierung der chemischen Reaktion beginnt. Erst wenn eine Dichtmasse ausgewählt wird, die nicht vor dem Befehl zu härten beginnt oder die z.B. aufgrund von Lagerungs-, Vorbereitungs- und Umgebungsbedingungen nicht wesentlich härtet, sondern nur zu wenigen Prozent anhärtet, kann eine Dichtmasse eingesetzt werden, die eine sehr kurze Klebfreie Zeit aufweist und dennoch eine im Vergleich hierzu lange Verarbeitungszeit aufweist.

Erst durch eine Kombination einer automatisierbaren oder automatischen Positionierung und Verwendung eines Düsenelements zur automatisierten Applikation eines Dichtmassenüberzugs lässt sich eine deutlich höhere Qualität in der Form, Größe, Gleichmäßigkeit und Reproduzierbarkeit von Dichtmassenüberzügen sowie ihrer zentrischen Positionierung erzielen, wie sie von Hand nie bei einer größeren Zahl an Applikationsstellen erreicht werden kann. Erst hiermit lassen sich Lufteinschlüsse in und unter den gebildeten Dichtmassenüberzügen sicher vermeiden. Lufteinschlüsse können zu Leckagen oder/und Korrosion an Verbindungselementen führen und sind somit höchst sicherheitsrelevant und unter allen Umständen zu vermeiden.

Es sind im Markt für Dichtmassen in der Luft- und Raumfahrt verschiedene Dichtmassen bekannt, die die sehr hohen Anforderungen z.B. an die Haftfestigkeit, Dauerbelastbarkeit, Elastizität, Schwingungsfestigkeit, Tieftemperaturflexibilität, Treibstoffbeständigkeit und Witterungsbeständigkeit über einen großen Temperaturbereich erfüllen.

Sogenannte Grundmassen mit einem Zusatz eines Härters werden als Dichtmassen oder als angemischte, als ungehärtete oder zumindest teilweise unausgehärtete Dichtmassen bezeichnet. Dichtmassen werden durch vorzugsweise homogenes Vermischen von Grundmasse(n) mit mindestens einem Härter gebildet, die im angemischten, unausgehärteten oder teilweise unausgehärteten Zustand noch in ihren Bestandteilen gänzlich oder teilweise in einer Mischung vorliegen, jedoch im Zuge der Aushärtung abreagieren und ein im Wesentlichen homogenes polymeres Netzwerk bilden. Das Gewichtsverhältnis von Dichtmasse zu Härter liegt bei vielen angemischten Dichtmassen im Bereich von 1 : 1 bis 10 : 1, im Bereich von 2 : 1 bis 8 : 1 oder im Bereich von 3:1 bis 6 : 1.

Frisch angemischte Dichtmassen, die noch nicht signifikant härten konnten, weisen üblicherweise eine Viskosität im Bereich von 50 bis 2000 Pa▪s auf, gemessen bei Raumtemperatur mit Rotationsviskosimeter. Auf waagerechten Oberflächen wie bei Tragflächen beträgt ihre Viskosität oft etwa 100 bis 200 Pa▪s, während für vertikal stehende Flächen, auf denen Dichtmasse appliziert werden soll, oft ihre Viskosität im Bereich von 1500 bis 2000 Pa▪s liegt.

Dichtmassen dienen hierbei auch zum Beschichten von Substratoberflächen, zum Verbinden oder/und Verkleben von Elementen sowie zum Abdichten oder/und zum Verfüllen von Hohl- oder/und Zwischenräumen von Bauteilen an Applikationsstellen. Die heute im Einsatz befindlichen treibstoffbeständigen Dichtmassen sind schwefelhaltige Polymere, die beim Aushärten vernetzen. Üblicherweise beginnt die Aushärtung bei fast allen in der Praxis eingesetzten Dichtmassen mit dem Zusatz des Härters zu der Grundmasse und mit deren Vermischung.

Der Nachteil bei den bekannten Dichtmassen und Verfahren für ihre Verarbeitung und Aushärtung liegt darin, dass bei einer gegebenen einzuhaltenden Verarbeitungszeit zu wenig Katalysator in die Dichtmasse eingebracht werden kann, um die Aushärtung in dem gewünschten Maße zu beschleunigen. Dies führt insbesondere bei langen Verarbeitungszeiten dazu, dass die Dichtmassen aufgrund ihrer damit verbundenen langen Aushärtungszeiten Arbeitsprozesse stark verzögern. Eine schnelle Durchhärtung ist aber auch bei Dichtmassen mit langer Verarbeitungszeit erforderlich.

Die heute in der Praxis eingesetzten am schnellsten härtenden Dichtmassen, die mercaptoterminierte Basispolymere enthalten, erlauben eine Verarbeitungszeit von nur etwa 10 oder 15 Minuten, wenn sie bei der Aushärtung innerhalb von 60 Minuten eine Shore A-Härte von 30 erreichen sollen - Tabellen 1 und 2. Diese Vorgabe wird nur mit großer Mühe und nur bei besonderen Dichtmassenzusammensetzungen erreicht.

Dabei besteht auch das Problem, dass bei den zweikomponentigen und vorzugsweise raumtemperaturhärtenden Dichtmassen die Zeit zum Erreichen der klebfreien Zeit und die Durchhärtezeit erheblich länger als die Verarbeitungszeit sind. Die konventionellen Beschichtungsverfahren sind daher oft mit außerordentlich langen Taktzeiten in der Herstellung von Bauteilen verbunden - siehe Tabelle 2.

Als Kriterium für einen gewissen Grad der Aushärtung kann die Zeit bis zum Erreichen einer Shore A-Härte von 30 verwendet werden, die nach DIN EN ISO 868, Oktober 2003, mit einem Typ A Shore-Durometer gemessen wird. Außerdem ist die klebfreie Zeit, gemessen nach DIN 65262-1, August 1996, Abschnitt 3.1.2.5, als Maß für die an der Dichtmassenoberfläche beginnende Härtung der Dichtmasse von großer Bedeutung. Denn die klebfreie Zeit bestimmt die Taktzeiten bei der Herstellung von Bauteilen, denn bei den vielfältigen Arbeiten an einem Bauteil bedeuten die Zeiten, bei denen eine aufgebrachte Dichtmasse noch nicht klebfrei ist, Stillstand für die mechanische Bearbeitung in der Nachbarschaft, damit nicht Abfälle, Abrieb, Späne, Schmutz oder/wie z.B. Staub auf die noch frische Dichtmassenoberfläche des Dichtmassenüberzugs gelangen und eingebunden werden. Solche Fehlstellen müssen verhindert werden, weil sie die Funktionsfähigkeit, die Abdichtfunktion und den Korrosionsschutz der Dichtmasse beeinträchtigen können. Weiterhin ist eine glatte und störungsfreie Oberfläche für eine spätere Reinigung oder/und Lackierung des Bauteils sowie für die Aerodynamik bei Applikationsstellen im Außenbereich sehr wichtig. Daher soll die Verarbeitungszeit möglichst lang und die klebfreie Zeit und gegebenenfalls auch die Durchhärtezeit möglichst kurz sein. Bei der Betrachtung dieser Parameter wird meist von der Verarbeitungszeit ausgegangen, während die klebfreie Zeit und die Durchhärtezeit mit der Dichtmassenklasse im Wesentlichen festgelegt werden. Nach der Klebfreien Zeit, der sog. tack-free time TFT, klebt die Dichtmasse an der Oberfläche eines Dichtmassenüberzugs nicht mehr und eine Polyethylenfolie kann dann rückstandsfrei von der Dichtmassenoberfläche entsprechend DIN 65262-1, August 1996, Abschnitt 3.1.2.5, abgezogen werden. Tabelle 1 definiert die bei der Aushärtung von Dichtmassen wichtigen Zeitparameter. Tabelle 2 gibt eine Übersicht über typische Zeiten bei der Aushärtung von Dichtmassen mit mercaptoterminiertem Basispolymer nach dem Stand der Technik und im Vergleich zu erfindungsgemäß einsetzbaren Dichtmassen mit kurzer klebfreier Zeit.

**Tabelle 1: Begriffserläuterung der für Dichtmassen relevanten Verarbeitungseigenschaften**

| Begriff | Definition |
|---|---|
| Verarbeitungszeit | Zeitspanne ab dem Anmischen von Grundmasse und Härter bzw. ab dem Aushärtungsbeginn bis die Dichtmasse aufgrund des Viskositätsanstiegs nicht mehr applizierbar ist. Sie wird nach DIN 65262-1, August 1996, Abschnitt 3.1.2.3 geprüft. |
| Klebfreie Zeit | Zeitspanne ab dem Anmischen von Grundmasse und Härter bzw. ab dem Aushärtungsbeginn bis zum Erreichen einer klebfreien Oberfläche eines Dichtmasseüberzugs. Sie wird nach DIN 65262-1, August 1996, Abschnitt 3.1.2.5 geprüft. |
| Durchhärtezeit | Zeitspanne ab dem Anmischen von Grundmasse und Härter bzw. ab dem Aushärtungsbeginn bis zum Erreichen einer Anfangshärte Shore A 30. Sie wird nach DIN EN ISO 868, Oktober 2003, mit einem Typ A Shore-Durometer geprüft. Der Wert der Shore A-Härte wird dabei innerhalb einer Sekunde abgelesen. |

**Tabelle 2: Übersicht über Trends und ausgewählte typische Zeiten bei der Aushärtung von Dichtmassen nach dem Stand der Technik und nach der Erfindung für mercaptoterminiertes Basispolymer**

| Begriff Zeit in [min] | konventionelle Dichtmassen | | | erfindungsgemäß einsetzbare SCOD-Dichtmassen | | |
|---|---|---|---|---|---|---|
| Verarbeitungszeit | 10-15 | ca. 25- 35 | ca. 120 | 10-15 | ca.25-35 | ca. 120 |
| Klebfreie Zeit | 30-120 | 120-600 | 480 - 840 | 0,01 -5 | 0,01 -5 | 0,01 -5 |
| Durchhärtezeit | 60 - 240 | 180-1800 | 540-2880 | 10-60 | 20-120 | 30 - 240 |

Bei diesen Angaben werden auch bei den konventionellen Dichtmassen nur Dichtmassensysteme berücksichtigt, die auf die Bedürfnisse der automatisierbaren Applikation abgestimmt sind und die üblicherweise im Einsatz an frei bestrahlbaren Oberflächen von Dichtmassenüberzügen bestrahlbar wären. Denn das Einbringen von Energie bei den erfindungsgemäßen Dichtmassen setzt voraus, dass der Dichtmassenüberzug typischerweise im Einsatz mindestens eine kleine frei bestrahlbare Oberfläche aufweist und nicht weitgehend oder gänzlich durch Kontaktflächen abgedeckt ist. Daher werden in den Angaben von Tabelle 2 keine Dichtmassenklassen berücksichtigt, die normalerweise nur vollflächig an großen Seitenflächen abgedeckt zwischen Bauteilen eingesetzt werden. Daher werden keine Dichtmassenüberzüge berücksichtigt wie insbesondere Zwischenlagendichtmassen der Dichtmassenklasse C.

Bisher ist die Anwendung von Dichtmassen bei der Herstellung oder der Instandhaltung von Luftfahrzeugen ein sehr aufwändiger Prozess. Grund dafür sind die zahlreichen Verbindungsstellen mit Dichtmassen, bei denen Dichtmassen mit oft langer Verarbeitungszeit verwendet werden müssen, die dann aber bisher proportional zur Länge der Verarbeitungszeit eine sehr lange Zeit für die vollständige Aushärtung und eine recht lange klebfreie Zeit bedingen - Tabelle 2.

Zum Beispiel benötigt eine konventionelle Dichtmasse der Klasse A-2 oder B-2 für den Luftfahrtbereich wie in Tabelle 2 bei einer Verarbeitungszeit von 120 Minuten eine Durchhärtezeit von etwa 9 bis 48 Stunden und typischerweise von 14 Stunden bis zum Erreichen der Shore A-Härte von 30. Hierbei handelt es sich eher um konventionelle Raupen-Dichtmassen = Dichtmassen der Klasse B und um konventionelle pinselbare Overcoat-Dichtmassen = Dichtmassen der Klasse A. Dichtmassenüberzüge aus Dichtmassen der Klassen A und B kann man üblicherweise mit Strahlung bestrahlen, da die Dichtmassenüberzüge größere frei zugängliche Oberflächen aufweisen, die nicht wie die Zwischenlagen-Dichtmassen = Dichtmassen der Klasse C zwischen zwei im Wesentlichen parallel angeordneten Bauteilen eingebracht sind. Außerdem benötigen die konventionellen Dichtmassen der Klassen A und B, die üblicherweise im Wesentlichen in Form einer sogenannten Raupe oder im Wesentlichen flächig, kappenförmig oder glockenförmig zum Beschichten von Bolzen, Nieten oder anderen Konstruktionselementen verwendet werden, bei einer Verarbeitungszeit von 30 Minuten üblicherweise 2 bis 10 Stunden, um klebfrei zu werden, und üblicherweise 3 bis 30 Stunden bis zum Erreichen der Shore A-Härte von 30.

Eine Dichtmasse hat bei Flugkörpern insbesondere die Aufgabe, Partien an Oberflächen abzudichten. Viele Dichtmassen weisen eine erhöhte oder hohe Treibstoffbeständigkeit und eine gute Haftung auf. Viele Dichtmassen ermöglichen auch aufgrund ihrer guten Abdichtung und Haftung eine hohe Korrosionsbeständigkeit für die metallischen Werkstoffe, indem sie u.a. den Zutritt von Wasser und Salzen verhindern. Wenn die Dichtmassenüberzüge an Außenflächen von Bauteilen geeignete Formen und im Wesentlichen geglättete Dichtmassenüberzugs-Oberflächen aufweisen, werden die aerodynamischen Anforderungen erfüllt.

Häufig verbindet hierbei eine Dichtmasse verschiedene Konstruktionselemente, wobei die Abdichtung auch bei und nach Schwingungen im Betrieb sicher erfolgen muss. Bei Flugkörpern ist es wichtig, dass Konstruktionselemente im Bereich von Treibstofftanks und Treibstoff führenden Konstruktionselementen sicher und dauerhaft abgedichtet werden. Hierbei kommt der sicheren dauerhaften Abdichtung von Konstruktionselementen insbesondere im Bereich von Tragflächen hohe Bedeutung zu, da die Innenräume von Tragflächen oft als Treibstofftanks verwendet werden.

Nur wenige Dichtmassen-Arten sind hierbei auf Dauer ausreichend haftfest, und dabei gleichzeitig tieftemperaturflexibel, treibstoffbeständig und temperaturwechselbeständig. Hierfür haben sich die Schwefel-haltigen Polysulfid- und Polythioether-Polymere bewährt.

Bei der Herstellung von Elementen für Flugkörper werden üblicherweise Hunderte oder Tausende von Verbindungselementen wie z.B. Nieten oder/und Schraubverbindungen gesetzt, die auf der jeweiligen Oberfläche z.B. an einer Tragfläche innen oder/und außen sicher und dauerhaft abgedichtet werden müssen. Das mechanische Bearbeiten von Konstruktionselementen an bestimmten präzise georteten Applikationsstellen z.B. an einer Tragfläche beispielsweise durch Bohren, das Setzen der Verbindungselemente und die sorgfältige Ausführung der Abdichtung an jeder Applikationsstelle erfordern einen erheblichen Bearbeitungs- und Zeitaufwand, der bis heute im Wesentlichen manuell von qualifizierten Bearbeitern ausgeführt wird.

WO 2013/154773 A1 beschreibt unter anderem Kappen zum Abdichten von mechanischen Befestigungselementen, die eine Hülle mit einer Außenfläche und mit einer Innenfläche aufweisen und einen Hohlraum definieren, die eine Öffnung aufweisen, die sich durch die Hülle zwischen Außenfläche und Innenfläche durchzieht, und deren Hohlraum wenigstens teilweise mit Dichtmasse gefüllt ist.

EP 2 586 537 A1 lehrt Düsen für die Applikation von Dichtmassen, die eine glockenförmige oder haubenförmige Düsenspitze und einen Klemmring an der Einspritzseite eines länglichen Düsenelements aufweisen. Das Einspritzen kann manuell oder mit automatisierten Dichtmassen-Einspritzmaschinen erfolgen.

EP 2 518 374 B1 schützt Vorrichtungen zum Abdichten einer Lücke zwischen einem Flächenpaar, wobei die Vorrichtung eine Düse zum Einspritzen von Dichtmasse in die Lücke enthält, wobei ein über Rollen geführtes Endlosband dem Bewegen von Einspritzdüse und Bestrahlungseinheit dient.

Es bestand daher die Aufgabe, Verfahren und Vorrichtungen vorzuschlagen, mit denen der Zeitaufwand und gegebenenfalls der Bearbeitungsaufwand bei der Abdichtung, bei der Beschichtung oder/und beim aerodynamischen Glätten von Applikationsstellen mit aus der Oberfläche hervorstehendem Verbindungselement, mit einem Spalt oder mit einer unebenen Verbindungsstelle deutlich verringert werden können. Hierbei wäre es von Vorteil, wenn die Qualität der mit ausgehärteter Dichtmasse abgedichteten Applikationsstellen noch verbessert werden könnte, ohne dadurch Zeit zu verlieren. Ferner wäre auch eine vereinfachte schnelle Fertigung von Bauteilen der Luft- und Raumfahrt vorteilhaft.

Die Aufgabe wird gelöst mit einem **Verfahren** gemäß Anspruch 1.

Hierbei umfasst die zu dem erfindungsgemäßen Verfahren zugehörige Vorrichtung, gemäß Anspruch 20, mindestens ein Behältnis mit mindestens einem Dichtmassenvorrat wie z.B. mindestens einen Dichtmassenvorratsbehälter, b) mindestens ein Düsenelement und c) mindestens eine Bestrahlungseinheit.

Eine Mischvorrichtung mit Dichtmassenvorratsbehälter wird insbesondere dann benötigt, wenn nicht von bereits angemischten Dichtmassen ausgegangen wird. Bei kleineren Mengen an Dichtmasse kann eine einkomponentige Dichtmasse oder eine angemischte mehrkomponentige Dichtmasse auch in Kartuschen oder größeren Behältern vorliegen, so dass gegebenenfalls ein größerer Dichtmassenvorratsbehälter entfallen kann. Die Kartuschen können bei Bedarf in einem Kartuschenmagazin gelagert werden.

Besonders bevorzugt ist ein Verfahren, bei dem ein gegebenenfalls kontinuierlicher Auftrag von Dichtmasse auf die Applikationsstellen und danach die unmittelbare Initiierung oder Aktivierung der chemischen Reaktionen mittels mindestens einer Bestrahlungseinheit zur beschleunigten Härtung insbesondere an der Oberfläche der Dichtmassenüberzüge erfolgt.

Hierbei wird im Verfahrensschritt iii) das Düsenelement oder zumindest ein Teil des Düsenelements von der Oberfläche mit dem Dichtmassenüberzug insbesondere dann, wenn die Düse oder Kappe sonst gegen den Dichtmassenüberzug stoßen würde oder/und für den Fall, dass zumindest ein Teil des Düsenelements nicht parallel zur Oberfläche über den Dichtmassenüberzug bewegt werden kann, abgehoben oder/und so bewegt, dass Beschädigungen des Dichtmassenüberzugs vermieden werden.

Der Begriff "Applikationsstelle" im Sinne dieser Anmeldung umfasst sowohl die drei Arten des aus einer Oberfläche hervorstehenden Verbindungselements, des Spalts und der unebenen Verbindungsstelle, die mit einem Dichtmassenüberzug versehen werden sollen, sowie gegebenenfalls auch die Position auf der Oberfläche, die zu behandeln ist.

Der Begriff "in die Nähe der Oberfläche" im Sinne dieser Anmeldung bedeutet, dass der vorderste Punkt, die vorderste Linie oder die vorderste Fläche des Düsenelements, das der Oberfläche im Verfahrensschritt i) angenähert wird, in einen Abstand im Bereich von 0,01 bis 20 mm, von 1 bis 12 mm, von 2 bis 8 mm oder von 3 bis 5 mm von der Oberfläche gebracht wird. Bei diesem Abstand besteht bei Bedarf auch Raum, dass insbesondere überschüssige Dichtmasse entfernt werden kann und dass der Dichtmassenüberzug am Applikationsort bei insbesondere im Wesentlichen linearem und im Wesentlichen parallel zur Oberfläche gerichtetem Auftrag wie für die Ausbildung von Raupen oder bei insbesondere im Wesentlichen drehendem und im Wesentlichen parallel zur Oberfläche gerichtetem Auftrag wie für die Ausbildung von Hütchen-artigen Formen möglichst in geeigneter Weise aufgebracht werden kann und hierbei gegebenenfalls auch in gleichmäßiger Form oder/und von geglätteter gleichmäßiger Oberfläche des Dichtmassenüberzugs.

Zusätzlich kann im Verfahrensschritt (v) gegebenenfalls das gesamte Düsenelement oder Teile hiervon wie das Verbindungselement oder/und der Düsenansatz, die Düse oder Kappe von Dichtmasseresten gereinigt werden. Hierbei kann es vorteilhaft sein, das Düsenelement oder Teile hiervon nach einer bestimmten Zahl an Dichtmassenüberzügen oder vor oder nach einem Wechsel eines Düsenelements oder eines seiner Teile insbesondere von Dichtmasse zu reinigen. Alternativ kann ein verschmutztes Düsenelement oder eines seiner Teile auch verworfen und bei Bedarf durch ein neues Düsenelement oder eines seiner Teile ersetzt werden. Aufgrund des Wechsels eines Düsenelements, aufgrund der Auftragsart mit einem bestimmten Düsenelement oder/und aufgrund des gewählten Dichtmassenvolumens kann die Form und Größe eines Dichtmassenüberzugs viel flexibler und schneller geändert werden als mit vorher eingefrorenen Vorformlingen, die in gleicher Geometrie, Größe und Form in größerer Zahl auf einer Unterlage zur Applikation bereitstehen müssen. Die Bereitstellung von vielen Spritzgußformen für Vorformlinge von verschiedenartiger Geometrie, Größe oder/und Form ist außerdem sehr aufwändig und begrenzt die Flexibilität der Applikation.

Bei dem erfindungsgemäßen Verfahren ist es bevorzugt, dass die SCOD-Dichtmasse im Verfahrensschritt ii) aus einem Dichtmassenvorrat wie z.B. aus einem Vorratsbehälter vorzugsweise mittels Druck auf das Verbindungselement in einem kontinuierlichen Strang oder in Strangportionen geführt oder/und gespritzt wird.

Bei dem erfindungsgemäßen Verfahren ist es bevorzugt, dass der noch nicht ausgehärtete Dichtmassenüberzug vor dem Verfahrensschritt iv) mit einem Werkzeug geformt oder/und an seiner Oberfläche geglättet wird oder/und im Verfahrensschritt ii) oder/und iii) durch räumliches und insbesondere durch lineares oder/und drehendes Bewegen des Düsenelements unter Abreißen des Dichtmassenstrangs oder/und durch Bewegung eines Werkzeugs geformt oder/und oberflächlich geglättet wird, um auf Endform gebracht zu werden.

Hierbei werden die Form des Dichtmassenüberzugs vorzugsweise vergleichmäßigt oder/und im Wesentlichen symmetrisch ausgebildet oder/und die Oberfläche des Dichtmassenüberzugs möglichst glatt ausgebildet.

Das Werkzeug kann im Wesentlichen ein Stab, Spachtel, Spatel, Steg, Messer oder Vorsprung an einer Halterung sein, mit dem der Dichtmassenüberzug insbesondere bei der Bewegung des Werkzeugs geformt oder/und oberflächlich geglättet wird. Eine solche Bearbeitung ist insbesondere bei raupenförmigen Dichtmassenüberzügen von Vorteil. Insbesondere bei der Ausbildung einer sogenannten Raupe, gegebenenfalls unter Verwendung einer sogenannten Raupendichtmasse, kann die Formgebung des Dichtmassenüberzugs über die Geometrie der Düse oder des Düsenansatzes mit jeweils mindestens einer Nase, Kante oder/und Schneide und gegebenenfalls unter Bewegung der Düse oder des Düsenansatzes ermöglicht werden.

Bei dem erfindungsgemäßen Verfahren ist es bevorzugt, dass der Dichtmassenüberzug im Wesentlichen auf eine Endform gebracht wird, die näherungsweise die Form einer Beschichtung, Glocke, Kappe oder/und einer hügelförmigen oder raupenförmigen Anhebung auf der Oberfläche bildet.

Bei dem erfindungsgemäßen Verfahren ist es bevorzugt, dass der Dichtmassenüberzug auf einer gesäuberten Oberfläche aufgebracht wird, die im Bereich der Auflagefläche des Dichtmassenüberzugs einen Haftvermittler aufweist. Als Haftvermittler kann grundsätzlich jeder eingesetzt werden, der eine geeignete Haftung auf dem Untergrund ermöglicht. Es können Haftvermittler-Zusammensetzungen mit einem Gehalt an Wasser oder/und organischem Lösemittel eingesetzt werden, z.B. solche auf Basis von Silan, Silanol, Siloxan oder/und Polysiloxan oder/und auf Basis von Titanat oder/und Zirkonat. Der Haftvermittler bzw. die Haftvermittlerschicht dient insbesondere der verbesserten Haftung zwischen der Oberfläche. Besonders bewährt hat sich insbesondere bei metallischen Oberflächen die Verwendung eines Haftvermittlers auf Basis von Silan, Silanol, Siloxan oder/und Polysiloxan und bei Oberflächen aus einem Verbundwerkstoff ein Haftvermittler auf Basis von Titanat oder/und Zirkonat. Der Haftvermittler kann grundsätzlich in jeder Applikationsart wie z.B. durch Pinseln, Sprühen, Tauchen oder/und durch manuellen oder automatisierten Auftrag mit einer Applikationseinheit ähnlich einem mit Haftvermittler getränkten Filzschreiber oder Tuch aufgebracht werden.

Diese Oberfläche kann insbesondere aus einem metallischen Werkstoff wie z.B. aus einer Legierung von Aluminium, Stahl oder Zink, aus einem Verbundwerkstoff wie z.B. Kohlenstofffaser-verstärktem Kohlenstoff CFC oder Kohlenstofffaser-verstärkter Kunststoff CFK oder/und aus organischem Material oder/und aus Kunststoff bestehen wie z.B. aus einem Kunststoff auf Basis von Polyetherimid PEI, von Polycarbonat PC oder von Polymethylmethacrylat PMMA bzw. aus einem Klebstoff oder/und einem Lack wie z.B. Epoxy-, Polyurethan- oder/und (Meth)acrylat-basierten Lacken.

Unter einem latenten Katalysator im Sinne der vorliegenden Erfindung wird ein Katalysator verstanden, der geeignet ist, die Reaktion zwischen den Reaktanden zu fördern und der entweder durch eine blockierende Schutzgruppe oder durch eine Umhüllung mit einem Kapselmaterial vorübergehend deaktiviert ist, wobei die Blockade bzw. Deaktivierung beim Energieeintrag z.B. durch energiereiche Strahlung aufgehoben wird. Bei latenten Katalysatoren mit blockierender Schutzgruppe kann z.B. eine Aminogruppe mit Säure blockiert werden. Bei latenten Katalysatoren mit einer Kapselung kann die Kapsel z.B. aus Polymer oder/und Wachs bei Energieeintrag z.B. durch energiereiche Strahlung gesprengt, geschmolzen oder/und geöffnet werden. Bei latenten Katalysatoren, die anfangs in Form von Ausgangs-oder/und sich komplementär ergänzenden Teilkomponenten vorliegen, wird der aktive Katalysator erst später bei äußerer Energieeinwirkung durch Reaktion gebildet. Der Energieeintrag bedingt hierbei die Freisetzung eines latenten Katalysators oder/und die direkte Aktivierung einer Reaktionskomponente.

Bei dem erfindungsgemäßen Verfahren ist es bevorzugt, dass die angemischte, die ungehärtete oder die zumindest teilweise ungehärtete Dichtmasse eine ist, bei der die Aushärtung durch Energieeintrag oder/und durch direkte Aktivierung von mindestens einer Reaktionskomponente bewirkt wird und daraufhin aushärtet oder/und bei der die Aushärtung durch Energieeintrag und durch Freisetzung eines latenten Katalysators initiiert wird und daraufhin aushärtet.

### Die folgenden Publikationen lehren SCOD-Dichtmassen-Svsteme:

Sogenannte SCOD-Dichtmassen (= "Sealant Cure on Demand") sind Dichtmassen, bei denen die Aushärtung auf "Befehl" mit einem Energieeintrag ausgelöst wird.
1.) EP 1 478 703 B1 lehrt ein- und zweikomponentige Dichtmassen, die u.a. mercaptoterminierte Schwefel-haltige Polymere auf Basis von Polysulfid, Polyether oder/und Polythioether und einen latenten Katalysator enthalten. Der latente Katalysator kann bei einer äußeren Energieeinwirkung in aktiver Form freigesetzt oder/und gebildet werden und dadurch die Reaktion zwischen Schwefel-haltigem Grundpolymer und Härter zur Aushärtung auslösen oder/und beschleunigen. Hierbei kann die Dichtmasse den latenten Katalysator in aktiver Form eingekapselt enthalten; Seine Kapselung kann bei äußerer Energieeinwirkung geschmolzen, aufgesprengt oder/und durch chemische Reaktion geöffnet oder aufgelöst werden. Der latente Katalysator kann auch in Form von Ausgangs- oder/und sich ergänzenden Teilkomponenten vorliegen, die erst bei äußerer Energieeinwirkung miteinander reagieren und so den aktiven Katalysator bilden. Die Aktivierung kann durch Wärmestrahlung, induktive Beheizung, Hochfrequenzanregung und Widerstandsheizung erfolgen. Die Aktivierung durch UV-Licht wird nicht explizit genannt.
2.) US 2013/0137817 A1 lehrt Dichtmassen, die flüssige Schwefel-haltige Polymere und als Reaktionspartner (Härter) mindestens eine blockierte Bismaleimidbasierte Verbindung enthalten, wobei der Härter bei Temperaturen im Bereich von 60 bis 120°C deblockiert wird und dabei die Reaktion startet. Nachteilig ist hierbei, dass die genannte hohe Temperatur über 15 min bis 2 Stunden gehalten werden muss, um eine Härtung zu erzielen. Aber eine Temperaturerhöhung ist im Flugzeugbereich immer ungünstig, da Aluminiumwerkstoffe hohe Wärmeausdehnungskoeffizienten aufweisen. Weder die Aktivierung durch UV-Licht noch ein latenter Katalysator werden explizit genannt.
3.) Aus WO 2012/021781 A1 und WO 2014/066039 A1 sind radikalisch härtende Dichtmassen auf Basis von Thiol-terminiertem Polythioether mit einem Polyen mit einer Polyvinylether- oder/und Polyallyl-Verbindung bzw. mit einer Alkenylterminierten Verbindung bekannt, die mit aktinischer Strahlung vernetzbar sind. Hierbei soll ein Photoinitiator die UV-Strahlung absorbieren und in ein Radikal umwandeln können, das die Polymerisation initiiert. Diese Publikationen offenbaren hierzu Acetophenone, α-Aminoalkylphenone, Benzoinether, Benzoyloxime, Acylphosphinoxide, Bisacylphosphinoxide, Benzophenone, Michler's Ketone, Thioxanthone, Anthrachinone, Camphorchinone, Fluorone und Ketocoumarin. Hierbei löst das aus dem Photoinitiator abgespaltene Radikal die Reaktion, die radikalische Polymerisation, aus. Diese Zusammensetzungen haben jedoch den Nachteil, dass sie in der Ausführung als einkomponentige Dichtmassen keine Härtung in den nicht von UV-Strahlung erfassten Bereichen, sogenannten Schattenbereichen, aufweisen und dass sie keine weitere Aushärtung nach Ende der Bestrahlung zeigen.
4.) Darüber hinaus ist aus WO 2013/153047 A1 eine zweikomponentige Dichtmasse bekannt, die mercaptoterminiertes Basispolymer auf Basis von Polythioether, Polysulfid, deren Copolymeren oder/und deren Mischungen enthält, welche mit isocyanatterminierten Verbindungen gehärtet werden kann. Bei diesem System initiiert ein Photoinitiator bzw. eine photolatente Base auf Basis von α-Aminoketon die Aushärtung, wodurch sehr kurze klebfreie Zeiten erreicht werden. Diese Zusammensetzungen haben die Vorteile, dass sie durch die Anwesenheit von tertiärem Amin eine Nachhärtung nach dem Ende der Bestrahlung ermöglichen und dass sie auch in nicht von UV-Strahlung erfassten Bereichen, sogenannten Schattenbereichen, aushärten.

Darüber hinaus wurde jetzt überraschend ein neues, vorzugsweise zweikomponentiges Dichtmassen-System gefunden, bei dem Polythioether-basierte Zusammensetzungen mit einem Epoxy-basierten Härter und mit einer photolatenten Base bei Energieeintrag mit energiereicher Strahlung zur Härtung initiiert werden und bei dem sehr kurze Klebfreie Zeiten erzielt werden. Hierbei basiert die Grundmasse im Wesentlichen auf mindestens einer Verbindung von flüssigen Polythioethern, die an den Enden der Moleküle jeweils eine Mercaptogruppe tragen. Die Polythioether können gegebenenfalls bis zu etwa 50 mol% Disulfidgruppen innerhalb des Moleküls enthalten. Gegebenenfalls kann in der Grundmasse zusätzlich mindestens eine disulfidhaltige Verbindung wie z.B. mindestens ein Polysulfid in einem Anteil an der Grundmasse von bis zu 80 Gew.-% enthalten sein. Die schwefelhaltigen Polythioether-Basispolymere weisen vorzugsweise einen Mercaptangehalt bezogen auf die reaktiven SH-Gruppen zum gesamten Basispolymer im Bereich von 0,5 bis 10 oder von 1,5 bis 7 Gew.-% oder/und einen Gesamt-Schwefelgehalt im Bereich von 5 bis 45 oder im Bereich von 12 bis 36 Gew.-% auf. Hierbei können bei Bedarf langkettige Polythioether insbesondere mit einem Molekulargewicht etwa im Bereich von 2500 bis 6000 g/mol und kurzkettige Polythioether insbesondere mit einem Molekulargewicht etwa im Bereich von 500 bis 2500 g/mol miteinander gemischt werden. Das Verhältnis der langkettigen zu den kurzkettigen Polythioethern liegt bevorzugt im Bereich von 25 : 1 bis 0,5 : 1 und besonders bevorzugt im Bereich von 20 : 1 bis 2 : 1 oder von 14 : 1 bis 8 : 1.

Der Härter ist bei diesem neuen Dichtmassen-System Epoxy-basiert und ist üblicherweise frei von Manganoxid, anorganischem und organischem Peroxid, Vinylverbindungen und Isocyanaten, wenn keine Co-Härtung beabsichtigt ist. Dies gilt insbesondere dann, wenn nur die mindestens eine Epoxidverbindung als Härtungsreagenz eingesetzt wird. Im Falle einer Co-Härtung kann es dennoch sinnvoll sein, wenn gleichzeitig mindestens eine weitere dieser Härtungsreagenzien ausgewählt aus Manganoxid, anorganischem und organischem Peroxid, Vinylverbindung und Isocyanat neben Epoxidverbindung eingesetzt wird, insbesondere bei gleichzeitigem Einsatz von Epoxid mit Isocyanat oder von Epoxid mit Manganoxid. Die Epoxidverbindungen werden vorzugsweise nur dem Härter zugesetzt. Daher erfolgt die Härtung der Dichtmasse mit mindestens einer Epoxy-basierten Verbindung. Dabei werden ausschließlich difunktionelle oder mehrfachfunktionelle Epoxidharze eingesetzt, mit Funktionalitäten von F=2 bis F=5. Die Funktionalität der verwendeten Mischung liegt vorzugsweise bei F=2,0 bis 3,0 oder bei 2,2 bis 2,8. Als Epoxidverbindung wird vorzugsweise Diglycidylether des Bisphenol A, Diglycidylether des Bisphenol F, aliphatischer Polyglycol-diglycidylether, Hydantoin-Epoxy-Derivate, epoxidierte ungesättigte und/oder phenolische Harze, Epoxy-Novolak-Harz, besonders bevorzugt quervernetztes Epoxy-Novolak-Harz oder/und ein Epoxidharz eingesetzt, das auf mehreren der oben genannten Klassen basiert, z.B. ein Bisphenol F-Novolak-Harz. Dem Härter können Additive wie z.B. Silane zugesetzt sein. Allerdings ist es bevorzugt, dass der Härter keine cycloaliphatischen Epoxidharze wie z.B. hydrierte Bisphenol-A-diglycidylether, hydrierte Bisphenol-A-diglycidylether-Oligomere, hydrierte Bisphenol-F-diglycidylether, hydrierte Bisphenol-F-diglycidylether-Oligomere und 3,4-Epoxycyclohexylmethyl-3,4-epoxycyclohexylcarboxylat enthält. Der Härter kann frei oder im Wesentlichen frei von Wasser sein. Er ist oft frei von Weichmachern.

Insbesondere mit diesem neuen Dichtmassensystem ist es aufgrund der besonders hohen Treibstoffbeständigkeit der Dichtmasse möglich, Treibstofftanks wie z.B. im Flügel von Flugzeugen bei der Herstellung abzudichten oder im regulären Betrieb und bei der Wartung von Flugzeugen abzudichten. Denn eine Undichtigkeit von Rumpf und Treibstofftanks ist zu vermeiden. Auf diese Weise wird eine besonders schnelle und einfache Reparaturmöglichkeit erzielt. Vorzugsweise ist die Dichtmasse VOC-frei.

Zur Härtung werden Grundmasse und Härter bei diesem neuen Dichtmassen-System so gemischt, dass vorzugsweise ein Epoxy-Überschuss überstöchiometrisch vorliegt. Der Überschuss beträgt hierbei bevorzugt 1 bis 80 mol% oder 5 bis 50 mol% oder 10 bis 30 mol%. Die Grundmasse oder/und der Härter enthalten mindestens eine photolatente Base auf Basis von sterisch gehindertem tertiärem Amin oder/und besonders bevorzugt auf Basis von sterisch gehindertem Amidin. Die photolatenten Basen können als latente Katalysatoren wirken und können unterschiedliche Strukturen aufweisen. Sie gehören vorzugsweise zur Klasse der α-Aminoketone oder/und der Amidine. Hierbei ist es bevorzugt, dass die photolatente Base beim Bestrahlen jeweils mindestens ein Amin oder/und Amidin freisetzt oder/und bildet und dass das freigesetzte oder/und gebildete Amin oder/und Amidin die Reaktion zwischen mercaptoterminiertem Polythioether mit Epoxy-basiertem Härter katalysiert. Besonders bevorzugt ist, dass die photolatente Base die Reaktion von Epoxidverbindung mit Mercaptan auslöst oder/und beschleunigt, wenn die angemischte oder/und die bereits aushärtende Dichtmasse bestrahlt wird.

Grundmasse oder/und Härter enthalten gegebenenfalls darüber hinaus mindestens einen Zusatzstoff z.B. ausgewählt aus Füllstoffen, Thixotropiermitteln, Haftvermittlern, Harzen und Lösemitteln.

Die Vorteile dieses neuen Epoxy-härtbaren Polythioether-basierten SCOD-Dichtmassensystems sind vor allem, 1.) dass die Dichtmassen eine hohe Treibstoffbeständigkeit besitzen, 2.) dass sie hochelastisch sind, 3.) dass aufgrund der schnellen klebfreien Zeit und der schnellen Härtung z.B. beim Bau von Flugzeugen kürzere Wartezeiten und Taktzeiten möglich sind und dass somit die Produktivität gesteigert werden kann und 4.) dass eine Härtung in nicht-bestrahlten Bereichen, in sogenannten "Schattenbereichen", der Dichtmasse erfolgen kann und dass eine Nachhärtung erfolgt, so dass trotz zu kurzer Bestrahlungszeit oder/und bei unvollständiger Bestrahlung über den Dichtmassenauftragsbereich eine vollständige Aushärtung erreicht werden kann. Mit diesem Dichtmassen-System können klebfreie Zeiten im Bereich von 0,01 bis 10 Minuten und Zeiten bis zur Durchhärtung von 1 bis 1.000 Minuten insbesondere je nach Schichtdicke erzielt werden.

Im Unterschied zu den bekannten Dichtmassensystemen, bei denen die Härtung mit Isocyanaten oder Vinylverbindungen erwirkt wird, funktioniert das hier neu beschriebene System mit Katalysatoren wie z.B. Acetophenonen, 1-Hydroxycyclohexylphenylketon, 2-Hydroxy-2-methyl-1-phenylpropan-1-on, 2,4,6-Trimethylbenzoyldiphenylphosphinoxid, 2-Dimethylamino-2-(4-methyl-benzyl)-1 -(4-morpholin-4-yl-phenyl)-butan-1 -on), 2-Benzyl-2-dimethylamino-1 -(4-morpholinophenyl)-1 -butanon, Bis-(2,6-dichlorobenzoyl)-2,4,4-trimethylpentylphosphinoxid üblicherweise nicht. Bei diesen neuen Formulierungen wurde festgestellt, dass photolatentes 1,5-Diazabicyclo[4.3.0]non-5-en (DBN) oder/und photolatentes 1,8-Diazabicyclo-[5.4.0]undec-7-en (DBU), gegebenenfalls in Gegenwart von mindestens einem Photosensibilisator wie Benzophenon oder/und Thioxanthonen, erfolgreich als latenter Katalysator eingesetzt werden kann/können. Diese Photoinitiatoren bzw. photolatente Basen setzen deutlich stärkere Basen als viele andere Photoinitiatoren frei. Nur diese stärkeren Basen können die Reaktion zwischen der Mercaptan- und der Epoxygruppe katalysieren. Wenn Photoinitiatoren zur Freisetzung von schwächeren Basen verwendet wurden, konnte in ersten Versuchen keine ausreichende Härtung erzielt werden.

Bei dem erfindungsgemäßen Verfahren ist es bevorzugt, dass die angemischte, ungehärtete oder zumindest teilweise unausgehärtete SCOD-Dichtmasse entweder
A) eine auf Basis von einer Grundmasse mit einem mercaptoterminierten Basispolymer auf Basis von Polythioether, Polysulfid, deren Copolymeren oder/und deren Mischungen, von mindestens einem Härter mit einem Gehalt an Isocyanat mit einer durchschnittlichen Funktionalität im Bereich von 1,5 bis 3,2 sowie von mindestens einer photolatenten Base auf Basis von α-Aminoketonist,
B) eine auf Basis von einer Grundmasse mit einem mercaptoterminierten Polythioether, einem Epoxy-basierten Härter und mindestens einer photolatenten Base auf Basis von sterisch gehindertem tertiärem Amin oder/und auf Basis von sterisch gehindertem Amidin ist, wobei diese photolatente Basen als latente Katalysatoren wirken, oder
C) eine auf Basis von Thiol-terminiertem Polythioether mit einem Polyen mit einer Polyvinylether- oder/und Polyallyl-Verbindung und auf Basis von einem Photoinitiator vorzugsweise ausgewählt aus der Gruppe bestehend aus Acetophenonen, α-Aminoalkylphenonen, Benzoinethern, Benzoyloximen, Acylphosphinoxiden, Bisacylphosphinoxiden, Benzophenonen, Michler's Ketonen, Thioxanthonen, Anthrachinonen, Camphorchinonen, Fluoronen und Ketocoumarinen ist,
wobei die angemischte, ungehärtete oder zumindest teilweise unausgehärtete SCOD-Dichtmasse durch Energieeintrag wie z.B. UV-Strahlung zu härten beginnen kann.

Hierbei ist es bei dem erfindungsgemäßen Verfahren bevorzugt, dass der mindestens eine Photoinitiator (für Typ C) oder die mindestens eine photolatente Base (für Typ A und B) beim Einwirken von energiereicher aktinischer Strahlung auf eine SCOD-Dichtmasse insbesondere vom Typ A) oder B) mindestens ein Molekül auf Basis von tertiärem Amin oder/und von Amidin abspaltet, das als aktiver Katalysator die Härtung der SCOD-Dichtmasse initiieren kann, und dass die zumindest teilweise ungehärtete SCOD-Dichtmasse nach dem kurzzeitigen Einwirken insbesondere von energiereicher aktinischer Strahlung keiner weiteren Bestrahlung bedarf und im Temperaturbereich von -10 bis +70 °C weiter aushärtet.

Eine photolatente Base ist ein Typ eines Photoinitiators.

Bei dem erfindungsgemäßen Verfahren ist es bevorzugt, dass der Energieeintrag in Verfahrensschritt iv) des erfindungsgemäßen Verfahrens durch Bestrahlen mit IR-Strahlung, NIR-Strahlung, Mikrowellenstrahlung, VIS-Strahlung, UV-VIS-Strahlung, UV-Strahlung, Ultraschallstrahlung, Elektronenstrahlung, Gammastrahlung, Betastrahlung oder/und Alphastrahlung erfolgt, die alle im Sinne dieser Anmeldung als Arten der energiereichen Strahlung angesehen werden. Besonders bevorzugt ist im Verfahrensschritt iv) die Verwendung von UV-Licht mit Wellenlängen etwa im Bereich von 100 bis 400 nm oder von UV-VIS-Licht mit Wellenlängen etwa im Bereich von 100 bis 600 nm. Ganz besonders vorteilhaft ist es, eine UV-Strahlung einzusetzen, die - gegebenenfalls auch als UV-VIS-Strahlung - hohe Anteile an UV-A-Strahlung insbesondere mit Wellenlängen etwa im Bereich von 315 - 400 nm oder/und an UV-B-Strahlung insbesondere mit Wellenlängen etwa im Bereich von 280 - 315 nm und nur geringe oder sogar keine Anteile an UV-C-Strahlung insbesondere mit Wellenlängen etwa im Bereich von 100 - 280 nm aufweist, insbesondere auch als näherungsweise monochromatische Strahlung, wie sie beispielsweise von UV-LED's erzeugt werden kann. Üblicherweise ist die Intensität einer Strahlenquelle der Strahlungseinheit vorgegeben, so dass oft nur die Bestrahlungszeit und der Abstand zwischen der Strahlungseinheit und dem Dichtmassenüberzug variiert werden kann. Der Abstand zwischen der Strahlungsquelle und dem Dichtmassenüberzug wird in vielen Ausführungsvarianten im Bereich von 1 bis 100 mm betragen. Mit einer Dichtmasse, die einen Photosensibilisator für UV-A-, UV-B- oder/und UV-C-Strahlung enthält, kann die mit dieser Strahlung eingetragene Energie besonders wirksam genutzt werden für die Initiierung oder Aktivierung der gewünschten chemischen Reaktionen.

Die folgende Tabelle 3 verdeutlicht die Strahlungsdosis und Aushärtungszeiten für verschiedene UV-Strahlungsarten je nach Abstand und Bestrahlungszeit. Hierbei wurden folgende Bedingungen berücksichtigt: UV-lntensität an der Dichtmassenoberfläche: 0,2-5,0 W/cm², UV-Dosis an der Dichtmassenoberfläche: 2-100 J/cm², Abstand zwischen Strahler und einer SCOD-Dichtmasse des Typs A: 10-100 mm, Bestrahlungszeit: 3-90 s; Blue Wave 200 (Model 38605), Spotlight 200 W,40* W/cm²; Fe-, Ga-dotierte Hg-Dampfstrahler oder reine Hg-Dampfstrahler oder UV-LED-Strahler, Spektrum: 200 - 450 nm, gemessen mit UV-Power Puck II S/N 19860, *gemessen direkt an der Lampe. Hierbei wurden Mischungen in einer Schichtdicke von 6 mm auf einem Prüfkörper appliziert und anschließend bestrahlt.

Hiernach könnten die Werte von 0,2 W/cm² und 2 J/cm² als untere Grenzen für die Intensität und die entsprechende Dosis gewählt werden. Denn sollte man unter 0,2 W/cm² liegen, würden keine besseren Ergebnisse erzielt werden, auch wenn man die UV-Dosis durch längere UV-Bestrahlung erhöhen würde.

**Tabelle 3: UV-Strahlungsarten und ihre Auswirkung auf die Bestrahlungszeit je nach Abstand**

| Bestr. -zeit | Abstand | UV-VIS | UV-AII | UV-A | UV-B | Summe UV | Klebfreie Zeit | Zeit bis Shore A 30 |
|---|---|---|---|---|---|---|---|---|
| [s] | [cm] | Dosis [J/cm²] | | | | | [min] | [min] |
| 3 | 3 | 2,17 | 0,94 | 1,39 | 0,27 | 3,83 | 0,5 | 30 |
| 15 | 3 | 10,95 | 5,02 | 6,53 | 1,20 | 18,68 | 0,2 | 10 |
| 6 | 6 | 1,48 | 0,50 | 0,96 | 0,16 | 2,60 | 1,0 | 60 |
| 9 | 9 | 1,08 | 0,39 | 0,72 | 0,12 | 1,91 | 1,5 | 90 |
| 18 | 9 | 2,13 | 0,76 | 1,40 | 0,20 | 3,73 | 1,2 | 80 |
| 30 | 15 | 1,18 | 0,37 | 0,75 | 0,00 | 1,93 | 2,0 | 120 |
| 60 | 20 | 1,17 | 0,00 | 0,77 | 0,00 | 1,94 | 4,0 | 160 |
| 90 | 30 | 0,00 | 0,00 | 0,00 | 0,00 | 0,00 | 180 | 600 |

Bei dem erfindungsgemäßen Verfahren ist es bevorzugt, dass der noch nicht ausgehärtete Dichtmassenüberzug im Verfahrensschritt iv) aufgrund der Bestrahlung bereits nach einer Zeit von etwa 0,01 bis 5 Minuten nach der Bestrahlung klebfrei ist/wird. Die Klebfreiheit kann hierbei auch nach 0,2 bis 4,5 Minuten, nach 0,5 bis 4 Minuten, nach 1 bis 3,5 Minuten, nach 1,5 bis 3 Minuten oder nach 2 bis 2,5 Minuten erreicht werden. Besonders bevorzugt ist, dass der noch nicht ausgehärtete Dichtmassenüberzug im Verfahrensschritt iv) aufgrund der Bestrahlung bereits nach 1 Minute oder bereits nach 30 Sekunden nach der Bestrahlung klebfrei ist/wird. Die Klebfreie Zeit wird nach DIN 65262-1, August 1996, 3.1.2.5 gemessen. Die Shore A-Härtemessung erfolgt nach DIN EN ISO 8 68, Oktober 2003, mithilfe eines Typ A Shore-Durometers. Dabei wird der Wert der Shore A-Härte innerhalb einer Sekunde abgelesen.

Die schnelle Klebfreiheit ist ein besonderer Vorteil dieser Erfindung. Denn das außergewöhnlich schnelle Erreichen des klebfreien Zustandes ist Voraussetzung, um die Arbeiten an einem Bauteil im Abstand von z.B. einem Meter oder mehreren Metern um eine frisch mit Dichtmassenüberzug versehene Applikationsstelle nach möglichst kurzer Zeit fortsetzen zu können und um keine Abfälle, keinen Abrieb, keine Späne und keinen Schmutz wie z.B. Staub insbesondere vom Bohren, Fräsen oder/und Schleifen oder/und durch Luftzug in die Oberfläche des Dichtmassenüberzugs bis zum Erreichen der Klebfreiheit einzubinden. Andererseits muss oft auch mit dem Begehen oder Bewegen eines Bauteils gewartet werden, bis die Klebfreiheit erreicht ist. Hierbei geht es insbesondere um die mechanische Bearbeitung von Werkstoffen oder/und Oberflächen in der Nähe von noch nicht ausgehärteten Dichtmasseüberzügen wie z.B. die Bearbeitung von Bauteilen aus metallischen oder/und organischen Werkstoffen oder/und aus Verbundwerkstoffen z.B. durch Bohren, Fräsen oder/und Schleifen oder/und um die Arbeiten oder/und um die Handhabung an den entsprechenden Bauteilen wie z.B. an Schalen- oder Flügelbauteilen, bei denen insbesondere Abfälle, Abrieb, Späne, Verformungen und Verschmutzungen auftreten können und bei denen es auch zum Kontakt mit noch nicht ausgehärteten Dichtmassenüberzügen kommen kann. Erst ab Klebfreiheit der Oberfläche der Dichtmasseüberzüge stören diese nicht, so dass die mechanische Bearbeitung, die Arbeiten und die Handhabung im Nahbereich der Dichtmasseüberzüge fortgesetzt werden kann.

Wenn die Dichtmasseüberzüge "klebfrei" ("tack-free") sind, entstehen üblicherweise keine Fehler mehr. Denn diese oberflächliche Härtung reicht üblicherweise aus, um ab Klebfreiheit keine Späne und Schmutz mehr an der Dichtmassenoberfläche anhaften zu lassen. Nachfolgende Operationen wie Schleifen, Bohren und Fräsen können somit viel schneller an schon mit Dichtmassen beaufschlagten Bauteilen fortgeführt werden. Daher ist das besonders schnelle Erreichen der Klebfreiheit der Oberflächen von Dichtmasseüberzügen von besonderer Bedeutung für die beschleunigte und fehlerfreie Fertigung in der Luft- und Raumfahrt.

Es gibt vereinzelt Bauteile, bei denen die vorherige vollständige Aushärtung erforderlich ist, wenn diese unter mechanischer Belastung bewegt werden sollen. Dazu reicht die Klebfreiheit in der Regel nicht aus, da die Dichtmassen in manchen Bereichen wie z.B. bei der Anbringung von Fußbodenplatten oder von Strukturelementen sonst verformt werden könnten, da sie aufgrund ihres zu diesem Zeitpunkt noch vorhandenen plastischen Anteils noch nicht das nötige Rückstellvermögen besitzen. Ab einer Shore-A-Härte von z.B. 30 wird dann üblicherweise von einem ausreichend hohen elastischen Anteil ausgegangen. Aber wenn ein Dichtmassenüberzug nach sehr kurzer Zeit klebfrei ist, wird auch nach kurzer Zeit eine Shore-A-Härte von z.B. 30 erreicht, ab der dann dieses Bauteil unter mechanischer Belastung bewegt werden kann, wie die Tabellen 1 und 2 darstellen.

Die weitere Aushärtung der Dichtmasse der Dichtmasseüberzüge ab Klebfreiheit oder ab einer bestimmten vorgegebenen Shore A-Härte kann dann ohne Nachteile bis zu mehrere Tage andauern. Es kommt daher nicht auf die Aushärtungsdauer an.

Anders als bei den oben genannten Bauteilen wirkt auf die erfindungsgemäß hergestellten Dichtmassenüberzüge jedoch kaum oder keine mechanische Belastung ein, da die Verbindungselemente normalerweise nicht vor Herstellung der kraftschlüssigen Verbindung mit Dichtmasse überzogen werden, so dass das Erreichen der Klebfreiheit für diese Dichtmassenüberzüge üblicherweise ausreicht.

Bei dem erfindungsgemäßen Verfahren ist es bevorzugt, dass bei Bedarf wie z.B. im Fall eines Wechsels bei der Applikation auf oder/und zwischen unterschiedlich geformten abzudichtenden Verbindungselementen, Spalten oder/und unebenen Verbindungsstellen ein Wechsel von mindestens einem Düsenelement oder von mindestens einem Teil eines Düsenelements wie einer Kappe, einer Düse, eines Verbindungskanals oder/und eines Verbindungselements zu einem Dichtmassenvorrat hin wie z.B. zu einem Dichtmassenvorratsbehälter vorgenommen wird. Hierbei kann das Düsenelement im Wesentlichen aus ein bis fünf Teilen bestehen, die je nach Bedarf unterschiedlich aufgebaut sein können, die aber üblicherweise folgende Teilelemente einteilig oder mehrteilig aufweisen können: Hierbei ergeben sich zwei Grundkonfigurationen der erfindungsgemäßen Düsenelemente:
A) Düsenelement (0) im Wesentlichen bestehend aus 1.) einem Verbindungselement (1) zu einem Dichtmassenvorrat hin wie z.B. zu einem Dichtmassenvorratsbehälter am hinteren Ende, das unmittelbar oder mittelbar mit einem Dichtmassenvorrat verbunden ist, und 2.) aus einem Verbindungskanal (2), der je nach Bedarf in eine Düse, in eine Kappe oder/und in ein Werkzeug am vorderen Ende übergehen kann, und
B) Düsenelement (0) im Wesentlichen bestehend aus 1.) einem Verbindungselement (1) zu einem Dichtmassenvorrat hin wie z.B. zu einem Dichtmassenvorratsbehälter am hinteren Ende, das unmittelbar oder mittelbar mit einem Dichtmassenvorrat verbunden ist, 2.) aus einem Verbindungskanal (2) und 3.) aus einer Düse, einer Kappe oder/und ein Werkzeug (3) am vorderen Ende.

In bevorzugten Ausführungsvarianten wird der unmittelbare oder mittelbare Anschluss eines einteiligen Düsenelements (0) oder eines seiner Teile wie einem Verbindungselement (1) zu einem Dichtmassenvorrat durch eine Verschlusstechnik wie durch einen Bajonett-Verschluss, durch einen Schnapp-Verschluss oder durch eine Schnellspannvorrichtung oder durch Aufstecken auf eine Aufnahme ermöglicht. In vielen bevorzugten Ausführungsvarianten wird der Verbindungskanal (2) länglich sein und es ermöglichen, dass die Dichtmasse in Richtung zur zu beschichtenden Oberfläche transportiert werden kann und dass ein Abstand zur Handhabung zur Mechanik oder Automatik (4) geschaffen ist. Zusätzlich ist der Verbindungskanal (2) vorzugsweise im Wesentlichen rohrförmig, schlauchförmig oder/und konisch ausgebildet und ist starr, biegsam oder flexibel ausgeführt, wobei ein flexibler Verbindungskanal (2) je nach Bedarf gebogen oder/und beweglich geführt werden kann.

In bevorzugten Ausführungsvarianten wird ein einteiliges Düsenelement (0) am Verbindungselement (1) zu einem Dichtmassenvorrat einen Verbindungskanal (2) aufweisen, der insbesondere im Wesentlichen rohrförmig, schlauchförmig oder/und konisch ausgebildet ist und starr, biegsam oder flexibel ausgeführt ist, wobei ein flexibler Verbindungskanal (2) je nach Bedarf gebogen oder/und beweglich geführt werden kann, und dessen vorderes Ende a) entweder im Wesentlichen wie der übrige Verbindungskanal (2) ausgeführt ist, b) einen Düsenansatz wie z.B. eine konische Verjüngung aufweist oder c) in eine Düse, in eine Kappe oder/und in ein Werkzeug am vorderen Ende übergeht.

In bevorzugten Ausführungsvarianten wird ein mehrteiliges Düsenelement (0) am Verbindungselement (1) zum Dichtmassenvorrat z.B. in einem Dichtmassenvorratsbehälter einen Verbindungskanal (2) aufweisen, der insbesondere im Wesentlichen rohrförmig, schlauchförmig oder/und konisch ausgebildet ist und starr oder flexibel ausgeführt ist,
wobei ein flexibler Verbindungskanal (2) je nach Bedarf gebogen oder/und beweglich geführt werden kann, und dessen vorderes Ende a) entweder im Wesentlichen wie der übrige Verbindungskanal (2) ausgeführt ist, b) einen Düsenansatz wie z.B. eine konische Verjüngung aufweist oder c) in eine Düse, in eine Kappe oder/und in ein Werkzeug am vorderen Ende übergeht,
wobei entweder das Verbindungselement (1) zu einem Dichtmassenvorrat und der Verbindungskanal (2), entweder der Verbindungskanal (2) und die Düse, die Kappe oder/und das Werkzeug (3) oder das Verbindungselement (1) zu einem Dichtmassenvorrat, der Verbindungskanal (2) und die Düse, die Kappe oder/und das Werkzeug (3) in getrennten Teilen vorliegen und z.B. durch Aufstecken auf eine Aufnahme, Drehen z.B. auf ein Gewinde oder Bajonett, Heften, Kleben, Einschnappen oder/und durch Schnellspanntechnik miteinander verbunden oder/und voneinander getrennt werden können.

Ein Düsenansatz kann vorzugsweise a) im Wesentlichen rund mit konstantem Durchmesser oder konisch, b) im Wesentlichen oval mit im Wesentlichen konstantem Durchmesser oder im Wesentlichen konisch, c) im Wesentlichen polygonal wie z.B. im Wesentlichen dreieckig, im Wesentlichen viereckig, im Wesentlichen fünfeckig oder im Wesentlichen sechseckig oder d) im Wesentlichen in einer Richtung seitlich zur Dichtmassentransportrichtung verbreitert sein, um einen im Wesentlichen breiten und dünneren Auftrag der Dichtmasse zu ermöglichen. Ein solcher Düsenansatz kann bei Bedarf auch zur spezifischen Formgebung oder/und Oberflächenglättung insbesondere bei einer räumlichen, seitlichen oder/und drehenden Bewegung eingesetzt werden.

Eine Düse kann im Vergleich zum Düsenansatz bei Bedarf noch spezifischer oder/und größer als ein Düsenansatz ausgebildet sein. Eine Düse kann insbesondere im Wesentlichen die Form von einer typischen Düse gegebenenfalls mit hervorstehenden oder/und gebogenen Flächen oder/und Partien annehmen. Viele, aber möglicherweise nicht alle der Düsenformen sind grundsätzlich bekannt.

Hierbei kann die Düse in besonderen Ausführungsvarianten am vordersten Ende besonders breit gezogen sein und bei Bedarf zusätzlich im Querschnitt zur Oberfläche eine flache oder hochgezogene und eine schmale oder breite Glockenform aufweisen, so dass beim oder/und nach dem Auftragen der Dichtmasse ein Bewegen der Düse durch Drehen z.B. um eine Achse z.B. im Wesentlichen senkrecht zur Oberfläche oder/und durch Bewegen im Wesentlichen parallel zur Oberfläche erfolgen, um eine aufgetragene Dichtmasse z.B. im Wesentlichen in eine rotationssymmetrische oder oval verzerrte Glockenform, in die Form eines flachen, rotationssymmetrischen, oval verzerrten oder/und länglichen Hügels oder näherungsweise in die Form einer sogenannten Raupe zu formen und gegebenenfalls dabei auch die Oberfläche der Dichtmasse zu glätten. Bei einem automatisierten Verfahren kann oft aufgrund der Optimierung der Prozeßschritte, aufgrund der optimierten Ausführung der Dichtmassenüberzugsform und -oberfläche und aufgrund der regelmäßigen und gleichartigen Arbeitsweise oft auf ein nachträgliches Glätten der Oberfläche der Dichtmassenüberzüge verzichtet werden.

Durch die flache oder hochgezogene und durch die schmale oder breite Glockenform kann die Form und Größe der aufgetragenen Dichtmasse an die Form und Größe eines aus einer Oberfläche hervorstehenden Verbindungselements mit einer ausreichenden Dichtmassenüberdeckung oder/und an den Auftrag an Dichtmasse in und über einem Spalt oder/und an einer unebenen Verbindungsstelle mit einer ausreichenden Dichtmassenüberdeckung angepasst werden.

Eine Kappe kann in vielen Formen und Größen ausgeführt sein. Sie kann insbesondere zum Abdichten von mindestens einem aus einer Oberfläche hervorstehenden Verbindungselement dienen. Sie kann insbesondere die Form im Wesentlichen von Glocken, hügelförmigen oder/und hochgezogenen Hütchen und Kappen annehmen, die vorzugsweise in den Abmessungen und im Verhältnis der Innendurchmesser zur Höhe an die Außendurchmesser und Höhe von aus einer Oberfläche hervorstehenden Verbindungselementen wie z.B. Bolzen, Nieten, Muttern oder/und Schrauben angepasst sind und deren Abstand zur Kappe mindestens 0,5 mm, mindestens 1 mm oder mindestens 2 mm beträgt oder/und deren "Wanddicken" für die Dichtmasse zwischen verschiedenen Messpunkten des Verbindungselements zur Kappeninnenfläche im Bereich von in etwa 0,5 bis 15 mm, 1 bis 12 mm, 2 bis 10 mm, 3 bis 8 mm oder 4 bis 6 mm liegen. Die Dichtmassenüberzüge über hervorstehenden Verbindungselementen und insbesondere die Hütchen haben häufig eine Größe etwa im Bereich von 5 bis 100 mm Außendurchmesser und eine Höhe gemessen senkrecht zur Basisfläche etwa im Bereich von 5 bis 50 mm.

Ein Werkzeug kann ebenfalls in vielen Formen und Größen ausgeführt sein. Es kann entweder allein an einem Verbindungselement (1) und an einem Träger (2a) einteilig oder mehrteilig genutzt werden. Alternativ kann auch eine Düse oder eine Kappe als Werkzeug benutzt werden, wobei die Düse oder Kappe aufgrund der räumlichen, seitlichen oder/und drehenden Bewegung und aufgrund seiner Form an der vordersten Basis wie ein Werkzeug benutzt werden kann.

Bei dem erfindungsgemäßen Verfahren ist es bevorzugt, dass die durchschnittliche Behandlungszeit je Verbindungselement, Spalt oder unebener Verbindungsstelle an einer Applikationsstelle auf der Oberfläche im Bereich von 0,1 bis 60 Sekunden, 5 bis 40 Sekunden, 8 bis 20 Sekunden oder 10 bis 15 Sekunden liegt, um eine SCOD-Dichtmasse auf der Oberfläche aufzubringen und gegebenenfalls auch näherungsweise in die gewünschte Form zu bringen, bevor das Düsenelement an eine nächste Applikationsstelle bewegt wird.

Bei dem erfindungsgemäßen Verfahren ist es bevorzugt, dass die durchschnittliche Wartezeit für alle gleichzeitig oder im Wesentlichen gleichzeitig behandelten Verbindungselemente, Spalte oder unebenen Verbindungsstellen an mindestens einer Applikationsstelle auf der Oberfläche im Bereich von 3 bis 120 Sekunden, 5 bis 80 Sekunden, 8 bis 40 Sekunden oder 10 bis 30 Sekunden liegt, wobei diese Wartezeit bis zur Klebfreiheit der Dichtmasse an mindestens einer Applikationsstelle vorzugsweise A) mit dem Entfernen von mindestens einer Einheit oder/und von einem Werkzeug zum Setzen oder/und Befestigen von mindestens einem Verbindungselement z.B. beim Nieten oder/und Schrauben oder/und B) mit dem Bewegen von mindestens einem Düsenelement auf die mindestens eine dann zu behandelnde Applikationsstelle beginnt und vorzugsweise entweder C) beim Erreichen der Klebfreiheit der Oberfläche(n) des mindestens einen Dichtmassenüberzugs oder/und D) nach einer Bewegung von mindestens einer Einheit der erfindungsgemäßen Vorrichtung oder/und von mindestens einer Einheit zum Bohren oder/und anderweiten mechanischen Bearbeiten, zum Säubern, von mindestens einer Einheit oder/und von einem Werkzeug zum Setzen oder/und Befestigen von mindestens einem Verbindungselement z.B. beim Nieten oder/und Schrauben endet. Daher kann diese Wartezeit als Zeit von A) bis C), von A) bis D), von B) bis C) oder von B) bis D) berechnet werden.

Bei dem erfindungsgemäßen Verfahren ist es bevorzugt, dass das Düsenelement (0) im Wesentlichen aus einem Verbindungselement (1) zu einem Dichtmassenvorrat, aus einem Verbindungskanal (2) und gegebenenfalls auch aus einer Düse, einer Kappe oder/und aus einem Werkzeug (3) oder/und aus einem Düsenansatz am Verbindungskanal (2) besteht, wobei das Düsenelement (0) einteilig oder mehrteilig sein kann. Vorzugsweise verjüngt sich der Verbindungskanal (2) vom Verbindungselement (1) zu einem Dichtmassenvorrat zum vorderen Ende des Verbindungskanals (2) oder zu seinem Düsenansatz oder zu dem Element (3) von Düse, Kappe oder/und Werkzeug.

Bei dem erfindungsgemäßen Verfahren ist es bevorzugt, dass der Verbindungskanal (2) im Wesentlichen schlauchförmig und gegebenenfalls biegsam oder/und flexibel ist.

Bei dem erfindungsgemäßen Verfahren ist es bevorzugt, dass der mindestens eine Photoinitiator einer erfindungsgemäßen Dichtmasse beim Einwirken von Energie und insbesondere beim Einwirken von energiereicher aktinischer Strahlung mindestens ein Molekül auf Basis von tertiärem Amin oder/und von Amidin abspaltet, das als aktiver Katalysator die Härtung der erfindungsgemäßen SCOD-Dichtmasse initiieren kann. Die Katalysatoren sind z.B. die photolatenten Basen auf Amidin-Basis, die unterschiedliche Schutzgruppen tragen können, wie z.B. 4-(Hexahydro-pyrrolo[1,2-a]pyrimidin-1 -ylmethyl)-benzoesäure-methylester, 4-(Hexahydro-pyrrolo[1,2-a]-pyrimidin-1 -ylmethyl)-benzoesäure-butylester, [4-(hexahydro-pyrrolo[1,2-a]pyrimidin-1-ylmethylrphenyl]-methanol, Hexansäure-4-(hexahydro-pyrrolo[1,2-a]pyrimidin-1-yl-methyl)-benzylester, 4-(Octahydro-pyrimido-[1,2-a]azepin-1 -ylmethyl)-benzoesäure-methylester oder/und 4-(Octahydro-pyrimido[1,2-a]azepin-1-y)methyl)-benzoesäure-hexylester. Nach der kurzzeitigen Einwirkung der energiereichen aktinischen Strahlung bedarf die unausgehärtete erfindungsgemäße SCOD-Dichtmasse keiner weiteren Bestrahlung und härtet im Temperaturbereich von -10 bis +70 °C weiter aus.

Bei dem erfindungsgemäßen Verfahren ist es bevorzugt, dass die angemischte erfindungsgemäße SCOD-Dichtmasse im Verfahrensschritt iv) zu einer klebfreien Dichtmasse ausgehärtet wird.

Bei dem erfindungsgemäßen Verfahren ist es bevorzugt, dass das aus der Oberfläche hervorstehende Verbindungselement im Wesentlichen ein Bolzen, eine Niete, eine Schraube, ein Gewindestift, eine Mutter, ein Stift oder ein hierzu ähnlich geformtes hervorstehendes Verbindungselement ist, dass der Spalt im Wesentlichen ein Leck, ein Loch, eine Naht, eine Fuge oder eine Kontaktstelle zwischen mehreren Konstruktionselementen an der Oberfläche ist oder/und dass die unebene Verbindungsstelle im Wesentlichen eine Falznaht, eine Klebestelle, eine Schweißstelle, eine Schweißnaht oder/und eine Unebenheit ist.

Bei dem erfindungsgemäßen Verfahren ist es bevorzugt, dass die Oberfläche, aus der das mindestens eine Verbindungselement hervorsteht oder/und die einen Spalt oder/und eine Unebenheit aufweist, eine Außen- oder Innenfläche eines Konstruktionselements oder/und eines Bauteils eines Luft- oder Raumfahrzeugs ist. Bei dem erfindungsgemäßen Verfahren ist es bevorzugt, dass die Oberfläche im Wesentlichen aus mindestens einem metallischen Werkstoff wie z.B. aus einer Aluminium-, Eisen-, Magnesium- oder/und Zinklegierung, aus mindestens einem Verbundwerkstoff wie z.B. aus Kohlenstofffaser-verstärktem Kohlenstoff CFC, aus Kohlenstofffaser-verstärktem Kunststoff CFK oder/und aus mindestens einem organischen Werkstoff oder/und Material wie z.B. aus einem Kunststoff, Klebstoff oder/und Lack besteht. Hierbei kann der Kunststoff beispielsweise einer auf Basis von Polyetherimid PEI, von Polycarbonat PC oder von Polymethylmethacrylat PMMA sein. Hierbei kann der Lack beispielsweise einer auf Basis von (Meth)acrylat, Epoxid oder/und Polyurethan sein. Die hierbei eingesetzten Werkstoffe und Materialien sind grundsätzlich bekannt.

Bei dem erfindungsgemäßen Verfahren ist es bevorzugt, dass mindestens einer der Verfahrensschritte i) bis iv) oder/und mindestens ein Verfahrensschritt nach Anspruch 3, - bei dem der noch nicht ausgehärtete Dichtmassenüberzug vor dem Verfahrensschritt iv) mit einem Werkzeug geformt oder/und oberflächlich geglättet wird oder/und im Verfahrensschritt ii) oder/und iii) durch räumliches und insbesondere durch lineares oder/und drehendes Bewegen des Düsenelements unter Abreißen des Dichtmassenstrangs oder/und durch Bewegung eines Werkzeugs geformt oder/und oberflächlich geglättet wird, um auf Endform gebracht

werden. Bei dem erfindungsgemäßen Verfahren werden die Verfahrensschritte i) bis iv) und mindestens ein Verfahrensschritt nach Anspruch mit einer automatischen Vorrichtung ausgeführt. Hierbei ist es bevorzugt, dass der mindestens eine der Verfahrensschritte i) bis iv) oder/und der Verfahrensschritt nach Anspruch 3 mit einer, mit zwei, mit drei, mit vier oder mit mehr als vier verschiedenartig arbeitenden automatischen Vorrichtung(en) ausgeführt wird. Hierbei ist es bevorzugt, dass diese Arbeitsgänge bei zwei oder bei mehr als zwei verschiedenartig arbeitenden automatischen Vorrichtungen in etwa zeitgleich an verschiedenen Applikationsstellen ausgeführt werden oder dass diese Arbeitsgänge bei zwei oder bei mehr als zwei vorwiegend gleichartig arbeitenden automatischen Vorrichtungen nacheinander an der gleichen Applikationsstelle ausgeführt werden.

Besonders bevorzugt ist es, möglichst viele der Arbeitsgänge von mindestens einem Verfahrensschritt und möglichst viele der Verfahrensschritte mit einer einzigen automatischen Vorrichtung auszuführen. Denn das kann in vielen Ausführungsvarianten zu Vereinfachungen und Zeiteinsparungen z.B. bei den Verfahrwegen führen.

Bei dem erfindungsgemäßen Verfahren werden mindestens zwei Applikationsstellen gleichzeitig behandelt werden oder gleichzeitig in Serie behandelt werden. Hierbei ist es bevorzugt dass mindestens 3, mindestens 4, mindestens 5, mindestens 6, mindestens 7, mindestens 8, mindestens 9, mindestens 10, mindestens 11 oder mindestens 12 und besonders bevorzugt mindestens 14 Applikationsstellen in mindestens 1 Verfahrensschritt, in mindestens 2, mindestens 3, mindestens 4 oder 5 der Verfahrensschritte im Wesentlichen gleichzeitig behandelt werden oder im Wesentlichen gleichzeitig in Serie behandelt werden.

Eine größere Zahl von Applikationsstellen und eine größere Zahl von im Wesentlichen oder vorwiegend gleichartig arbeitenden automatischen Vorrichtungen oder von vorwiegend verschiedenartig arbeitenden automatischen Vorrichtungen ist insbesondere für größere Bauteile mit einer größeren Zahl an Applikationsstellen wie z.B. für die Behandlung von Tragflächen bevorzugt. Hierbei können diese automatischen Vorrichtungen bei Bedarf zumindest teilweise in einem automatisierten Ablauf gekoppelt sein oder/und in mechanisch-räumlich zugeordneten Verbindungen stehen.

Der Begriff "im Wesentlichen gleichzeitig" im Sinne dieser Anmeldung bedeutet, dass bei regelmäßigem Arbeiten ein Zeitunterschied von bis zu 30 Sekunden, von bis zu 20 Sekunden oder von bis zu 10 Sekunden zwischen zwei verschiedenen Verfahrensschritten als Zeitversatz auftreten kann.

Bei dem erfindungsgemäßen Verfahren ist es bevorzugt, dass mindestens eine automatische Vorrichtung zur Durchführung des Verfahrens oder mindestens eine ihrer Einheiten nach Ausführung der Arbeitsgänge von mindestens einem Verfahrensschritt nach Anspruch 1 von der bearbeiteten Applikationsstelle automatisiert so bewegt wird, dass sie zu einer nächsten Applikationsstelle mit einem aus der Oberfläche hervorstehenden Verbindungselement, zu einem Spalt oder zu einer unebenen Verbindungsstelle (Applikationsstelle) gelangt und dort die Arbeitsgänge ausführt.

Bei dem erfindungsgemäßen Verfahren ist es bevorzugt, dass mindestens eine Einheit der automatischen Vorrichtung zur Durchführung des erfindungsgemäßen Verfahrens die Verfahrensschritte i) bis iii) ausführt, während mindestens eine andere Einheit den Verfahrensschritt iv) ausführt.

Bei dem erfindungsgemäßen Verfahren ist es bevorzugt, dass mindestens eine Einheit der automatischen Vorrichtung zur Durchführung des erfindungsgemäßen Verfahrens die Verfahrensschritte i) bis iii) ausführt, während im Wesentlichen gleichzeitig mindestens eine andere Einheit den Verfahrensschritt iv) ausführt.

Bei dem erfindungsgemäßen Verfahren ist es bevorzugt, dass mindestens eine Einheit der automatischen Vorrichtung zur Durchführung des erfindungsgemäßen Verfahrens für die Verfahrensschritte i) bis iii) und dass mindestens eine andere Einheit für den Verfahrensschritt iv) nach Ausführung der Arbeitsgänge im Wesentlichen gleichzeitig zur nächsten Applikationsstelle versetzt werden.

Bei dem erfindungsgemäßen Verfahren ist es bevorzugt, dass alle Verfahrensschritte i) bis v) ausgeführt werden, bevor entweder die mindestens eine Einheit der automatischen Vorrichtung zur Durchführung des erfindungsgemäßen Verfahrens für die Verfahrensschritte i) bis iii) und die mindestens eine andere Einheit für den Verfahrensschritt iv) oder die gesamte automatische Vorrichtung nach Ausführung der Arbeitsgänge im Wesentlichen gleichzeitig zur nächsten Applikationsstelle versetzt werden/wird.

Bei dem erfindungsgemäßen Verfahren ist es bevorzugt, dass das Versetzen von Einheiten oder von der gesamten Vorrichtung so erfolgt, dass an mindestens einer Applikationsstelle mit aus einer Oberfläche hervorstehenden Verbindungselement oder an mindestens einer unebenen Verbindungsstelle, die in einer Ebene oder Fläche senkrecht zu der Oberfläche angeordnet sind und im Wesentlichen eindimensional angeordnet sind, dass die verschiedenen Arbeitsgänge für eine Applikationsstelle nacheinander ausgeführt werden, wobei jeweils 1 bis 15 gleichartige Einheiten jeweils im Wesentlichen gleichzeitig ihre Arbeitsgänge an entsprechend 1 bis 15 Applikationsstellen ausführen, bevor ein Versetzen um entsprechend 1 bis 15 Applikationsstellen erfolgt.

Bei dem erfindungsgemäßen Verfahren ist es bevorzugt, dass das Versetzen von Einheiten oder von der gesamten Vorrichtung so erfolgt, dass an mindestens einer Applikationsstelle mit aus einer Oberfläche hervorstehenden Verbindungselement oder an mindestens einer unebenen Verbindungsstelle, die in einer Ebene oder Fläche senkrecht zu der Oberfläche angeordnet sind und im Wesentlichen eindimensional angeordnet sind, dass die verschiedenen Arbeitsgänge für eine Applikationsstelle nacheinander ausgeführt werden, wobei verschiedene Einheiten im Wechsel in der Ebene oder Fläche angeordnet sind, wobei jeweils 1 bis 45 verschiedenartige Einheiten jeweils im Wesentlichen gleichzeitig ihre Arbeitsgänge an entsprechend 3 bis 45 Applikationsstellen ausführen, bevor ein Versetzen um mindestens 2 Applikationsstellen erfolgt.

Bei dem erfindungsgemäßen Verfahren ist es bevorzugt, dass mehrere gleichartige Einheiten insbesondere für die Verfahrensschritte i) bis iii) im Wesentlichen in einer vorzugsweise geraden Linie angeordnet sind und dass mehrere gleichartige Einheiten insbesondere für den Verfahrensschritt iv) im Wesentlichen in einer zweiten vorzugsweise geraden Linie angeordnet sind, wobei die Einheiten der ersten zur zweiten Linie in im Wesentlichen gleichen Abständen oder gewinkelt hierzu angeordnet sein können, so dass viele Applikationsstellen mit aus einer Oberfläche hervorstehenden Verbindungselementen oder mit unebenen Verbindungsstellen, die zweidimensional auf einer Oberfläche wie z.B. einem Flügel oder Rumpf eines Flugkörpers angeordnet sind, im Wesentlichen gleichzeitig behandelt werden können oder behandelt werden, wobei jeweils 2 bis 15 gleichartige Einheiten in beiden Linien jeweils im Wesentlichen gleichzeitig ihre Arbeitsgänge an entsprechend jeweils 2 bis 15 Applikationsstellen ausführen, bevor ein Versetzen um entsprechend jeweils 2 bis 15 Applikationsstellen in beiden Linien im Wesentlichen in Richtung der Linien oder im Wesentlichen senkrecht hierzu zu weiteren Linien erfolgt.

Die Aufgabe wird auch gelöst mit einer automatischen Vorrichtung gemäß Anspruch 20 zur Durchführung des erfindungsgemäßen Verfahrens, das dadurch gekennzeichnet ist, dass sie mindestens eine Station für mindestens einen der Verfahrensschritte i) bis iv) und dabei mindestens ein Düsenelement und - gegebenenfalls separat - mindestens eine Bestrahlungseinheit aufweist.

Hierbei können das mindestens eine Düsenelement und die mindestens eine Bestrahlungseinheit miteinander in einem mechanischen Verbund stehen oder voneinander getrennt sein. Sie können bei Bedarf in beiden Fällen über eine gemeinsame oder getrennte Steuereinheit betrieben werden.

Hierbei ist es bevorzugt, dass mindestens 2, mindestens 3, mindestens 4, mindestens 5, mindestens 6, mindestens 7, mindestens 8, mindestens 9, mindestens 10, mindestens 11 oder mindestens 12 und besonders bevorzugt mindestens 14 Stationen für mindestens einen, für mindestens zwei, für mindestens drei, für mindestens vier oder für jeden der Verfahrensschritte i) bis iv) vorhanden sind.

Bei der erfindungsgemäßen Vorrichtung ist es bevorzugt, dass es eine Einrichtung zur Ausbildung von Dichtmassenüberzügen als Abdichtung von Bolzen, Nieten, Verschraubungen, Schweißstellen oder ähnlichen Verbindungselementen oder ähnlichen Applikationsstellen in einer linearen und gegebenenfalls auch abwinkelbaren oder schwenkbaren Einrichtung umfasst, bei der mehrere Stationen in Reihe geschaltet sind.

Die erfindungsgemäße Vorrichtung weist mindestens eine Einheit für die Verfahrensschritte i) bis iii), oder mindestens eine Einheit für die Verfahrensschritte i) bis iv) auf.

Hierbei umfasst die Vorrichtung a) einen Dichtmassenvorrat z.B. in mindestens einer Mischvorrichtung mit einem Dichtmassenvorratsbehälter, in mindestens einem Dichtmassenvorratsbehälter, in mindestens einer Kartusche oder/und in mindestens einem Kartuschenmagazin mit mindestens einer gefüllten Kartusche, b) mindestens ein Düsenelement und c) mindestens eine Bestrahlungseinheit. Hierbei kann alternativ zu einem Dichtmassenvorratsbehälter oder zu einer Mischvorrichtung mit einem Dichtmassenvorratsbehälter auch mindestens eine Kartusche oder/und ein Kartuschenmagazin verwendet werden.

Bei der erfindungsgemäßen Vorrichtung ist es bevorzugt, dass die Einheit für die Verfahrensschritte i) bis iii) oder i) bis iv) Elemente zum Düsen-, Kappen- oder/und Werkzeugwechsel (Elementwechsel) aufweist, bei denen bei einem Düsen-, Kappen-oder/und Werkzeugwechsel ein Wechsel der Düsenformen, Düsengrößen, Kappenformen, Kappengrößen oder/und Werkzeuge ermöglicht ist
a) durch Drehen eines Revolvers mit mehreren derartigen Elementen unterschiedlicher Form oder/und Größe,
b) durch Bewegen eines Magazins mit mehreren derartigen Elementen unterschiedlicher Form oder/und Größe,
c) durch Abnehmen, Abschrauben, Abdrehen eines Bajonett-Verschlusses, Entschnappen eines zuvor verwendeten derartigen Elements oder Lösen einer Schnellspanneinrichtung oder/und durch Verbinden mit bzw. durch Aufstecken, Aufschrauben, Aufdrehen eines Bajonett-Verschlusses, Einschnappen eines derartigen Elements oder Verbinden eines derartigen Elements einer bestimmten Form oder/und Größe über eine Schnellspanneinrichtung, oder/und
d) durch Verwendung von mindestens einem länglichen und über die Länge insbesondere in einem mittleren Abschnitt geteilten Düsenelement, dessen Teile mit einer Aufsteck-, Dreh-, Bajonett-, Schnapp- oder Schnellspann-Technik verbunden bzw. entkoppelt werden können, bei denen das Düsenteil zu einem Dichtmassenvorrat hin wie z.B. zu einem Vorratsbehälter nicht bei jedem Düsenwechsel gewechselt wird und bei denen das Düsenteil mit einem Düsenansatz oder mit einer Kappe zur Ausbildung des Dichtmassenüberzugs bzw. der Dichtmassenkappe gewechselt wird.

Hierbei kann gegebenenfalls ein Düsenelement oder ein Teil hiervon aus einem Magazin oder aus einer Halterung entnommen bzw. gegebenenfalls ein Düsenelement oder ein Teil hiervon in ein Magazin oder in eine Halterung zurückgeführt werden. Alternativ kann das zuvor verwendete Düsenelement oder ein Teil hiervon verworfen werden und bei Bedarf durch ein neues ersetzt werden.

Bei der erfindungsgemäßen Vorrichtung ist es bevorzugt, dass die Einheit für oder mit dem Verfahrensschritt iv) mindestens eine Bestrahlungseinheit für den Energieeintrag in Verfahrensschritt iv) durch IR-Strahlung, NIR-Strahlung, Mikrowellenstrahlung, VIS-Strahlung, UV-VIS-Strahlung, UV-Strahlung, Ultraschallstrahlung, Elektronenstrahlung, Gammastrahlung, Betastrahlung oder/und Alphastrahlung sowie insbesondere für UV- oder für UV-VIS-Strahlung vorbereitet ist. UV-oder UV-VIS-Strahlung ist besonders bevorzugt, weil sie für die Initiierung bzw. Aktivierung der jeweiligen Reaktionen und Prozesse besonders geeignet ist, aber andererseits auch oft keine für den Bearbeiter schädlichen Wellenlängenbereiche umfasst. Außerdem ist diese Strahlung mit UV-LED's gut zu erzeugen.

Bei der erfindungsgemäßen Vorrichtung ist es bevorzugt, dass sie mindestens ein Element oder/und mindestens eine Einheit für mindestens einen Verfahrensschritt nach Anspruch 3 - nach dem der noch nicht ausgehärtete Dichtmassenüberzug vor dem Verfahrensschritt iv) mit einem Werkzeug geformt oder/und oberflächlich geglättet wird oder/und im Verfahrensschritt ii) oder/und iii) durch räumliches und insbesondere durch lineares oder/und drehendes Bewegen des Düsenelements unter Abreißen des Dichtmassenstrangs oder/und durch Bewegung eines Werkzeugs geformt oder/und oberflächlich geglättet wird, um auf Endform gebracht zu werden - umfasst.

Bei der erfindungsgemäßen Vorrichtung ist es bevorzugt, dass sie eine Einrichtung zum Säubern des Düsenelements oder eines ihrer Teile z.B. mit Druckluft in einer Weise enthält, bei der die entfernten Dichtmassenreste und Schmutzreste nicht auf die Dichtmassenüberzüge geblasen bzw. gerichtet werden.

Bei Bedarf kann die erfindungsgemäße Vorrichtung mit mindestens einer Steuereinheit oder mit mindestens einer Programmiereinheit versehen und hiermit gesteuert werden. Hierbei werden insbesondere die verschiedensten Zeiten für die verschiedenen Aktivitäten und Einheiten, der Druck zur Portionierung der Dichtmassenmenge für einen Dichtmassenüberzug, die Dosiergeschwindigkeit, die verschiedenen Positionen, die Bewegungen, die Bewegungsgeschwindigkeiten und die Verfahrwege gesteuert werden.

Die Aufgabe wird auch gelöst durch **Verwendung** des erfindungsgemäßen Verfahrens oder/und der erfindungsgemäßen Vorrichtung an oder/und in einem Luft-oder Raumfahrzeug, gemäß Anspruch 26.

Es war überraschend, dass mit dem erfindungsgemäßen Verfahren eine erhebliche Verbesserung der Geometrie, der Oberflächenglätte und der Gleichmäßigkeit in Geometrie, Größe und Form erzielt werden konnte. Erhebliche Vorteile ergaben sich bei einem automatisierten oder automatischen Verfahren, bei dem eine Nachbearbeitung der Dichtmassenüberzüge in ihrer Form und ihrer Oberflächenqualität bei geeigneter Optimierung des Verfahrens vollständig entfallen konnte, wobei alle Dichtmassenüberzüge des gleichen Typs völlig gleichartig aussahen.

Es war überraschend, dass mit dem erfindungsgemäßen Verfahren eine Zeitersparnis im Bereich von 10 bis 50 % je nach dem Bauteil, den Anforderungen und den jeweiligen Verfahrensbedingungen und ihrer Automatisierung für eine große Zahl an Applikationsstellen im Vergleich zu konventionellen Verfahren mit erheblichem manuellen Umfang erzielt werden konnte, wobei es sich vor allem auswirkte, dass Wartezeiten erheblich verkürzt werden konnten durch den Einsatz von auf Befehl aushärtenden Dichtmassen unter den Bedingungen von kurzen Zeiten der Klebfreiheit.

Es war weiterhin überraschend, dass aufgrund des automatischen Verfahrens nicht nur geringe Materialeinsparungen und hohe Kosteneinsparungen möglich sind, sondern dass auch die Qualität der Dichtmassenüberzüge aufgrund präziser Positionierung und gegebenenfalls auch Zentrierung bei hervorstehenden Verbindungselementen nicht nur eine erhebliche Qualitätsverbesserung unter Vermeidung von zu dünnen und dann gegebenenfalls nicht ausreichend abdichtenden Partien der Wandungen, sondern auch eine deutliche Steigerung der sicheren Abdichtung z.B. von Treibstofftanks ermöglichte, was sogar ein Sicherheitsproblem löst.

## Patentansprüche

1. Verfahren zum Abdichten, Beschichten oder/und aerodynamischen Glätten von mindestens einem aus einer Oberfläche hervorstehenden Verbindungselement mit einer Schwefel-haltigen Dichtmasse, bei der die Aushärtung "auf Befehl" mit einem Energieeintrag ausgelöst wird, - im Folgenden als "SCOD-Dichtmasse" bezeichnet - an mindestens einer Applikationsstelle insbesondere an einem Bauteil der Luft- und Raumfahrt mit mindestens einem Düsenelement und mit mindestens einer Bestrahlungseinheit, **dadurch gekennzeichnet,**
i) **dass** mindestens ein Düsenelement, dessen Innenraum mittelbar oder unmittelbar mit einem Dichtmassenvorrat, das heißt: mit mindestens einer Mischvorrichtung, mit mindestens einem Dichtmassenvorratsbehälter, mit mindestens einer Kartusche oder/und mit mindestens einem Kartuschenmagazin verbunden ist, eine angemischte, unausgehärtete oder zumindest teilweise unausgehärtete SCOD-Dichtmasse enthält, das über das aus einer Oberfläche hervorstehende Verbindungselement geführt oder/und gestülpt wird und hierbei in Kontakt mit der Oberfläche oder in die Nähe der Oberfläche gebracht wird,
ii) **dass** der Innenraum von mindestens einem Düsenelement mit SCOD-Dichtmasse aus einem Dichtmassenvorrat wie z.B. aus einem Vorratsbehälter zumindest soweit gefüllt und mit der Oberfläche zumindest näherungsweise in Kontakt gebracht wird, dass das aus der Oberfläche hervorstehende Verbindungselement - das als "Applikationsstelle" bezeichnet wird - vollständig mit SCOD-Dichtmasse bedeckt ist, wobei die SCOD-Dichtmasse einen Dichtmassenüberzug im Wesentlichen in der Form einer Dichtmassenkappe, einer Beschichtung oder/und einer hügelförmigen Anhebung bildet,
iii) **dass** mindestens ein Düsenelement oder zumindest ein Teil von mindestens einem Düsenelement bei Bedarf von der Oberfläche mit dem Dichtmassenüberzug abgehoben wird, und
iv) **dass** die Aushärtung der SCOD-Dichtmasse 1.) mit Hilfe von mindestens einer Bestrahlungseinheit durch Energieeintrag in einen Dichtmassenüberzug wie z.B. durch Bestrahlen mit energiereicher Strahlung und 2.a) dabei oder/und dadurch die Freisetzung eines latenten Katalysators initiiert wird oder 2.b) dabei oder/und dadurch die direkte Aktivierung von mindestens einer Reaktionskomponente bewirkt wird, so dass die angemischte SCOD-Dichtmasse daraufhin aushärtet oder/und weiter aushärtet,
wobei die Verfahrensschritte i) bis iv) mit einer automatischen Vorrichtung ausgeführt werden, wobei mindestens zwei Applikationsstellen gleichzeitig behandelt werden oder gleichzeitig in Serie behandelt werden.

2. Verfahren nach Anspruch 1, **dadurch gekennzeichnet, dass** die SCOD-Dichtmasse im Verfahrensschritt ii) aus einem Dichtmassenvorrat wie z.B. aus einem Vorratsbehälter mittels Druck auf das Verbindungselement in einem kontinuierlichen Strang oder in Strangportionen geführt oder/und gespritzt wird.

3. Verfahren nach mindestens einem der Ansprüche 1 oder 2, **dadurch gekennzeichnet, dass** der noch nicht ausgehärtete Dichtmassenüberzug vor dem Verfahrensschritt iv) mit einem Werkzeug geformt oder/und oberflächlich geglättet wird oder/und im Verfahrensschritt ii) oder/und iii) durch räumliches und insbesondere durch lineares oder/und drehendes Bewegen des Düsenelements unter Abreißen des Dichtmassenstrangs oder/und durch Bewegung eines Werkzeugs geformt oder/und oberflächlich geglättet wird, um auf Endform gebracht zu werden.

4. Verfahren nach mindestens einem der vorangehenden Ansprüche, **dadurch gekennzeichnet, dass** der Dichtmassenüberzug im Wesentlichen auf eine Endform gebracht wird, die näherungsweise die Form einer Beschichtung, Glocke, Kappe oder/und einer hügelförmigen Anhebung auf der Oberfläche bildet.

5. Verfahren nach mindestens einem der vorangehenden Ansprüche, **dadurch gekennzeichnet, dass** der Dichtmassenüberzug auf einer gesäuberten Oberfläche aufgebracht wird, die im Bereich der Auflagefläche des Dichtmassenüberzugs einen Haftvermittler aufweist.

6. Verfahren nach mindestens einem der vorangehenden Ansprüche, **dadurch gekennzeichnet, dass** der Energieeintrag in Verfahrensschritt iv) durch IR-Strahlung, NIR-Strahlung, Mikrowellenstrahlung, VIS-Strahlung, UV-VIS-Strahlung, UV-Strahlung, Ultraschallstrahlung, Elektronenstrahlung, Gammastrahlung, Betastrahlung oder/und Alphastrahlung erfolgt.

7. Verfahren nach mindestens einem der vorangehenden Ansprüche, **dadurch gekennzeichnet, dass** bei Bedarf wie z.B. im Fall eines Wechsels bei der Applikation auf oder zwischen unterschiedlich geformten abzudichtenden Verbindungselementen ein Wechsel von mindestens einem Düsenelement oder von mindestens einem Teil eines Düsenelements wie einer Kappe, einer Düse, eines Verbindungskanals oder/und eines Verbindungselements zu einem Dichtmassenvorrat hin wie z.B. zu einem Vorratsbehälter vorgenommen wird.

8. Verfahren nach mindestens einem der vorangehenden Ansprüche, **dadurch gekennzeichnet, dass** das Düsenelement (0) im Wesentlichen aus einem Verbindungselement (1) zu einem Dichtmassenvorrat hin wie z.B. zu einem Vorratsbehälter, aus einem Verbindungskanal (2) und gegebenenfalls auch aus einer Düse, einer Kappe oder/und aus einem Werkzeug (3) oder/und aus einem Düsenansatz am Verbindungskanal (2) besteht, wobei das Düsenelement (0) einteilig oder mehrteilig sein kann.

9. Verfahren nach Anspruch 8, **dadurch gekennzeichnet, dass** der Verbindungskanal (2) im Wesentlichen schlauchförmig und gegebenenfalls biegsam oder/und flexibel ist.

10. Verfahren nach mindestens einem der vorangehenden Ansprüche, **dadurch gekennzeichnet, dass** die angemischte, ungehärtete oder zumindest teilweise unausgehärtete SCOD-Dichtmasse entweder
A) eine auf Basis von einer Grundmasse mit einem mercaptoterminierten Basispolymer auf Basis von Polythioether, Polysulfid, deren Copolymeren oder/und deren Mischungen, von mindestens einem Härter mit einem Gehalt an Isocyanat mit einer durchschnittlichen Funktionalität im Bereich von 1,5 bis 3,2 sowie von mindestens einer photolatenten Base auf Basis von α-Aminoketonist,
B) eine auf Basis von einer Grundmasse mit einem mercaptoterminierten Polythioether, einem Epoxy-basierten Härter und mindestens einer photolatenten Base auf Basis von sterisch gehindertem tertiärem Amin oder/und auf Basis von sterisch gehindertem Amidin ist, wobei diese photolatente Basen als latente Katalysatoren wirken, oder
C) eine auf Basis von mercaptoterminierten Polythioether mit einem Polyen mit einer Polyvinylether- oder/und Polyallyl-Verbindung und auf Basis von einem Photoinitiator vorzugsweise ausgewählt aus der Gruppe bestehend aus Acetophenonen, a-Aminoalkylphenonen, Benzoinethern, Benzoyloximen, Acylphosphinoxiden, Bisacylphosphinoxiden, Benzophenonen, Michler's Ketonen, Thioxanthonen, Anthrachinonen, Camphorchinonen, Fluoronen und Ketocoumarinen ist,
wobei die angemischte, ungehärtete oder zumindest teilweise unausgehärtete SCOD-Dichtmasse durch Energieeintrag wie z.B. UV-Strahlung zu härten beginnen kann.

11. Verfahren nach Anspruch 10, **dadurch gekennzeichnet, dass** der mindestens eine Photoinitiator insbesondere für Typ C oder die mindestens eine photolatente Base insbesondere für Typ A oder B beim Einwirken von energiereicher aktinischer Strahlung auf eine SCOD-Dichtmasse insbesondere vom Typ A) oder B) mindestens ein Molekül auf Basis von tertiärem Amin oder/und von Amidin abspaltet, das als aktiver Katalysator die Härtung der SCOD-Dichtmasse initiieren kann, und dass die zumindest teilweise ungehärtete SCOD-Dichtmasse nach dem Einwirken insbesondere von energiereicher aktinischer Strahlung keiner weiteren Bestrahlung bedarf und im Temperaturbereich von -10 bis +70 °C weiter aushärtet.

12. Verfahren nach mindestens einem der vorangehenden Ansprüche, **dadurch gekennzeichnet, dass** der Verfahrensschritt nach Anspruch 3 mit einer automatischen Vorrichtung ausgeführt wird.

13. Verfahren nach mindestens einem der vorangehenden Ansprüche, **dadurch gekennzeichnet, dass** eine automatische Vorrichtung zur Durchführung des Verfahrens oder mindestens eine ihrer Einheiten nach Ausführung der Arbeitsgänge von mindestens einem Verfahrensschritt nach Anspruch 1 von der bearbeiteten Applikationsstelle automatisiert so bewegt wird, dass sie zu einer nächsten Applikationsstelle mit einem aus der Oberfläche hervorstehenden Verbindungselement gelangt und dort die Arbeitsgänge ausführt.

14. Verfahren nach mindestens einem der vorangehenden Ansprüche, **dadurch gekennzeichnet, dass** mindestens eine Einheit der automatischen Vorrichtung zur Durchführung des Verfahrens nach Anspruch 1 die Verfahrensschritte i) bis iii) ausführt, während mindestens eine andere Einheit den Verfahrensschritt iv) ausführt.

15. Verfahren nach mindestens einem der Ansprüche 1 bis 13, **dadurch gekennzeichnet, dass** mindestens eine Einheit der automatischen Vorrichtung zur Durchführung des Verfahrens nach Anspruch 1 die Verfahrensschritte i) bis iii) ausführt, während gleichzeitig mindestens eine andere Einheit den Verfahrensschritt iv) ausführt.

16. Verfahren nach mindestens einem der vorangehenden Ansprüche, **dadurch gekennzeichnet, dass** alle Verfahrensschritte i) bis iv) ausgeführt werden, bevor entweder die mindestens eine Einheit der automatischen Vorrichtung zur Durchführung des Verfahrens nach Anspruch 1 für die Verfahrensschritte i) bis iii) und die mindestens eine andere Einheit für den Verfahrensschritt iv) oder die gesamte automatische Vorrichtung nach Ausführung der Arbeitsgänge gleichzeitig zur nächsten Applikationsstelle versetzt werden/wird.

17. Verfahren nach mindestens einem der vorangehenden Ansprüche, **dadurch gekennzeichnet, dass** das Versetzen von Einheiten oder von der gesamten Vorrichtung so erfolgt, dass an mindestens einer Applikationsstelle mit aus einer Oberfläche hervorstehenden Verbindungselement oder an mindestens einer unebenen Verbindungsstelle, die in einer Ebene oder Fläche senkrecht zu der Oberfläche angeordnet sind und im Wesentlichen eindimensional angeordnet sind, dass die verschiedenen Arbeitsgänge für eine Applikationsstelle nacheinander ausgeführt werden, wobei jeweils 1 bis 15 gleichartige Einheiten jeweils gleichzeitig ihre Arbeitsgänge an entsprechend 1 bis 15 Applikationsstellen ausführen, bevor ein Versetzen um entsprechend 1 bis 15 Applikationsstellen erfolgt.

18. Verfahren nach mindestens einem der vorangehenden Ansprüche 1 bis 16, **dadurch gekennzeichnet, dass** das Versetzen von Einheiten oder von der gesamten Vorrichtung so erfolgt, dass an mindestens einer Applikationsstelle mit aus einer Oberfläche hervorstehenden Verbindungselement oder an mindestens einer unebenen Verbindungsstelle, die in einer Ebene oder Fläche senkrecht zu der Oberfläche angeordnet sind und im Wesentlichen eindimensional angeordnet sind, dass die verschiedenen Arbeitsgänge für eine Applikationsstelle nacheinander ausgeführt werden, wobei verschiedene Einheiten im Wechsel in der Ebene oder Fläche angeordnet sind, wobei jeweils 1 bis 45 verschiedenartige Einheiten jeweils gleichzeitig ihre Arbeitsgänge an entsprechend 3 bis 45 Applikationsstellen ausführen, bevor ein Versetzen um mindestens 2 Applikationsstellen erfolgt.

19. Verfahren nach mindestens einem der vorangehenden Ansprüche 1 bis 16, **dadurch gekennzeichnet, dass** mehrere gleichartige Einheiten insbesondere für die Verfahrensschritte i) bis iii) im Wesentlichen in einer vorzugsweise geraden Linie angeordnet sind und dass mehrere gleichartige Einheiten insbesondere für den Verfahrensschritt iv) im Wesentlichen in einer zweiten vorzugsweise geraden Linie angeordnet sind, wobei die Einheiten der ersten zur zweiten Linie in im Wesentlichen gleichen Abständen oder gewinkelt hierzu angeordnet sein können, so dass viele Applikationsstellen mit aus einer Oberfläche hervorstehenden Verbindungselementen oder mit unebenen Verbindungsstellen, die zweidimensional auf einer Oberfläche wie z.B. einem Flügel oder Rumpf eines Flugkörpers angeordnet sind, gleichzeitig behandelt werden können oder behandelt werden, wobei jeweils 2 bis 15 gleichartige Einheiten in beiden Linien jeweils gleichzeitig ihre Arbeitsgänge an entsprechend jeweils 2 bis 15 Applikationsstellen ausführen, bevor ein Versetzen um entsprechend jeweils 2 bis 15 Applikationsstellen in beiden Linien im Wesentlichen in Richtung der Linien oder im Wesentlichen senkrecht hierzu zu weiteren Linien erfolgt.

20. Automatische Vorrichtung zur Durchführung des Verfahrens nach mindestens einem der vorangehenden Ansprüche, **dadurch gekennzeichnet, dass** sie mindestens eine Station für mindestens einen der Verfahrensschritte i) bis iv) und dabei mindestens ein Düsenelement, dessen Innenraum mittelbar oder unmittelbar mit einem Dichtmassenvorrat verbunden ist und das eine angemischte, unausgehärtete oder zumindest teilweise unausgehärtete SCOD-Dichtmasse enthält, und - gegebenenfalls separat - mindestens eine Bestrahlungseinheit aufweist, und dass sie mindestens eine Einheit für die Verfahrensschritte i) bis iii) oder mindestens eine Einheit für die Verfahrensschritte i) bis iv) aufweist.

21. Vorrichtung nach Anspruch 20, **dadurch gekennzeichnet, dass** es eine Einrichtung zur Ausbildung von Dichtmassenüberzügen als Abdichtung von Bolzen, Nieten, Verschraubungen, Schweißstellen oder ähnlichen Verbindungselementen oder ähnlichen Applikationsstellen in einer linearen und gegebenenfalls auch abwinkelbaren oder schwenkbaren Einrichtung umfasst, bei der mehrere Stationen in Reihe geschaltet sind.

22. Vorrichtung nach mindestens einem der Ansprüche 20 oder 21, **dadurch gekennzeichnet, dass** die Einheit für die Verfahrensschritte i) bis iii) oder i) bis iv) Elemente zum Düsen-, Kappen- oder/und Werkzeugwechsel aufweist, bei denen bei einem Düsen-, Kappen- oder/und Werkzeugwechsel ein Wechsel der Düsenformen, Düsengrößen, Kappenformen, Kappengrößen oder/und Werkzeuge ermöglicht ist
a) durch Drehen eines Revolvers mit mehreren derartigen Elementen unterschiedlicher Form oder/und Größe,
b) durch Bewegen eines Magazins mit mehreren derartigen Elementen unterschiedlicher Form oder/und Größe,
c) durch Abnehmen, Abschrauben, Abdrehen eines Bajonett-Verschlusses, Entschnappen eines zuvor verwendeten derartigen Elements oder Lösen einer Schnellspanneinrichtung oder/und durch Verbinden mit bzw. durch Aufstecken, Aufschrauben, Aufdrehen eines Bajonett-Verschlusses, Einschnappen eines derartigen Elements oder Verbinden eines derartigen Elements einer bestimmten Form oder/und Größe über eine Schnellspanneinrichtung, oder/und
d) durch Verwendung von mindestens einem länglichen und über die Länge insbesondere in einem mittleren Abschnitt geteilten Düsenelement, dessen Teile mit einer Aufsteck-, Dreh-, Bajonett-, Schnapp- oder Schnellspann-Technik verbunden bzw. entkoppelt werden können, bei denen das Düsenteil zu einem Dichtmassenvorrat hin wie z.B. zu einem Vorratsbehälter nicht bei jedem Düsenwechsel gewechselt wird und bei denen das Düsenteil mit einem Düsenansatz oder mit einer Kappe zur Ausbildung des Dichtmassenüberzugs bzw. der Dichtmassenkappe gewechselt wird.

23. Vorrichtung nach mindestens einem der Ansprüche 20 bis 22, **dadurch gekennzeichnet, dass** die Einheit für oder mit dem Verfahrensschritt iv) mindestens eine Bestrahlungseinheit für UV- oder für UV-VIS-Licht aufweist.

24. Vorrichtung nach mindestens einem der Ansprüche 20 bis 23, **dadurch gekennzeichnet, dass** sie ein Element oder eine Einheit für den Verfahrensschritt nach Anspruch 3 umfasst.

25. Vorrichtung nach Anspruch 24, **dadurch gekennzeichnet, dass** sie eine Einrichtung zum Säubern des Düsenelements oder eines ihrer Teile z.B. mit Druckluft in einer Weise enthält, bei der die entfernten Dichtmassenreste und Schmutzreste nicht auf die Dichtmassenüberzüge geblasen bzw. gerichtet werden.

26. Verwendung des erfindungsgemäßen Verfahrens nach mindestens einem der Ansprüche 1 bis 19 oder/und der erfindungsgemäßen Vorrichtung nach mindestens einem der Ansprüche 20 bis 25 an oder/und in einem Luft- oder Raumfahrzeug.

## Claims

1. A method for sealing, coating or/and aerodynamic smoothing of at least one connecting element that protrudes from a surface with a sulfur-containing sealing compound where curing is initiated "on demand" with an energy input - referred to hereinbelow as a "SCOD sealing compound" - at at least one application site, especially on an aerospace component, with at least one nozzle element and with at least one irradiation unit, wherein
i) at least one nozzle element, whose inner space is indirectly or directly connected to a sealing compound reservoir, i.e.: to at least one mixing apparatus, to at least one sealing compound tank, to at least one cartridge or/and to at least one cartridge magazine, contains a mixed, uncured or at least partially uncured SCOD sealing compound, which nozzle element is guided or/and slipped over the connecting element protruding from a surface and is therefore brought into contact with the surface or near the surface,
ii) the inner space of at least one nozzle element is filled with SCOD sealing compound from a sealing compound reservoir, such as a tank, to at least such an extent, and is brought at least approximately in contact with the surface, that the connecting element protruding from the surface - referred to as the "application site" - is completely covered with SCOD sealing compound, wherein the SCOD sealing compound forms a sealing compound coating, which essentially has the shape of a sealing compound cap, of a coating or/and of a mound-shaped elevation,
iii) at least one nozzle element or at least a part of at least one nozzle element, if necessary, is raised from the surface with the sealing compound coating, and
iv) the curing of the SCOD sealing compound 1.) is initiated by at least one irradiation unit through energy input into a sealing compound coating, such as by irradiating with high energy radiation and 2.a) therein or/and thereby the release of a latent catalyst is initiated or 2.b) therein or/and thereby the direct activation of at least one reaction component is effected, so that the mixed SCOD sealing compound subsequently cures or/and cures further,
wherein steps i) to iv) are performed with an automatic apparatus, wherein at least two application sites are processed simultaneously or are processed simultaneously in succession.

2. The method according to claim 1, wherein the SCOD sealing compound at step ii) is led or/and ejected from a sealing compound reservoir such as a tank under pressure on the connecting element in a continuous line or in portions of a line.

3. The method according to at least one of claims 1 and 2, wherein the still uncured sealing compound coating, before step iv) is formed or/and superficially smoothed with a tool or/and at step ii) or/and iii) is formed or/and superficially smoothed by spatial and in particular linear or/and rotating movement of the nozzle element by ripping the sealing compound line or/and by moving a tool, in order to achieve the final form.

4. The method according to at least one of the preceding claims, wherein the sealing compound coating is essentially brought into a final form, which approximates the shape of a coating, bell, cap or/and a mound-shaped elevation on the surface.

5. The method according to at least one of the preceding claims, wherein the sealing compound coating is applied to a cleaned surface, which has an adhesion agent in the area of the contact surface of the sealing compound coating.

6. The method according to at least one of the preceding claims, wherein the energy input at step iv) is performed by IR radiation, NIR radiation, microwave radiation, VIS radiation, UV-VIS radiation, UV radiation, ultrasound radiation, electron radiation, gamma radiation, beta radiation or/and alpha radiation.

7. The method according to at least one of the preceding claims, wherein, if necessary, such as in the case of change during application on or between differently shaped connecting elements to be sealed, a change from at least one nozzle element or from at least a portion of a nozzle element such as a cap, nozzle, connection channel or/and connecting element to a sealing compound reservoir, such as a tank, is performed.

8. The method according to at least one of the preceding claims, wherein the nozzle element (0) is essentially composed of a connecting element (1) to a sealing compound reservoir, such as a tank, a connection channel (2) and possibly a nozzle, a cap or/and a tool (3) or/and a nozzle extension on the connection channel (2), wherein the nozzle element (0) may be in one or multiple parts.

9. The method according to claim 8, wherein the connection channel (2) essentially has a hose-like shape and is possibly bendable or/and flexible.

10. The method according to at least one of the preceding claims, wherein the admixed, uncured or at least partially uncured SCOD sealing compound either
A) is a sealing compound based on a base mass with a mercapto-terminated base polymer based on polythioether, polysulfide, their copolymers or/and mixtures thereof, at least one curing agent with a content of isocyanate having an average functionality in the range from 1.5 to 3.2 and at least one photolatent base on the basis of α-aminoketone,
B) is a sealing compound based on a base mass with a mercapto-terminated polythioether, an epoxy-based curing agent and at least one photolatent base based on sterically hindered tertiary amine or/and based on sterically hindered amidine, wherein said photolatent bases act as latent catalysts, or
C) is a sealing compound based on mercapto-terminated polythioether with a polyene with a polyvinyl ether or/and polyallyl compound and based on a photoinitiator, preferably selected from the group consisting of acetophenones, α-aminoalkylphenones, benzoinethers, benzoyloximes, acylphosphine oxides, bisacylphosphine oxides, benzophenones, Michler's ketones, thioxanthones, anthraquinones, camphorquinones, fluorones and ketocoumarins,
wherein the mixed, uncured or at least partially uncured SCOD sealing compound may start to cure by supplying energy such as UV radiation.

11. The method according to claim 10, wherein the at least one photoinitiator, in particular for type C, or the at least one photolatent base, in particular for type A and B, through irradiation with high energy actinic radiation on an SCOD sealing compound, in particular of type A) or B), cleaves at least one molecule based on tertiary amine or/and amidine, which may initiate the curing of the SCOD sealing compound as an active catalyst, and wherein the at least partially uncured SCOD sealing compound after irradiation with, in particular, high energy actinic radiation, does not require further irradiation, and continues curing in the temperature range between -10 and +70°C.

12. The method according to at least one of the preceding claims, wherein the step of claim 3 is performed with an automatic apparatus.

13. The method according to any of the preceding claims, wherein an automatic apparatus for executing the method or at least one of its units is automatically moved from the processed application site after performing the processes of at least one step of claim 1, in such a way that it reaches a following application site with a connecting element protruding from the surface and performs the processes in that position.

14. The method according to at least one of the preceding claims, wherein at least one unit of the automatic apparatus, in order to perform the method of claim 1, performs steps i) to iii), while at least one other unit performs step iv).

15. The method according to at least one of claims 1 to 13, wherein at least one unit of the automatic apparatus, in order to perform the method of claim 1, performs steps i) to iii), while, simultaneously, at least one other unit performs step iv).

16. The method according to at least one of the preceding claims, wherein all steps i) to iv) are performed before either the at least one unit of the automatic apparatus, in order to perform the method of claim 1, for steps i) to iii) and the at least one other unit for step iv), or the entire automatic apparatus, after performing the processes, are/is moved, simultaneously, to the following application site.

17. The method according to at least one of the preceding claims, wherein the displacement of units or of the entire apparatus is performed so that, at at least one application site with a connecting element protruding from a surface or at at least one uneven connection site, which are disposed in a plane or surface perpendicular to the surface, and are essentially arranged in a one-dimensional arrangement, the various processes for an application site are performed in succession, wherein in each case 1 to 15 units of the same type respectively simultaneously perform their processes at corresponding 1 to 15 application sites, before a displacement by correspondingly 1 to 15 application sites takes place.

18. The method according to any of the preceding claims 1 to 16, wherein the displacement of units or of the entire apparatus is performed in such a way that at at least one application site with a connecting element protruding from a surface or at at least one uneven connection site, which are disposed in a plane or surface perpendicular to the surface, and are essentially arranged in a one-dimensional arrangement, the various processes for an application site are performed in succession, wherein different units are alternatively disposed in the plane or surface, wherein in each case 1 to 45 different units respectively simultaneously perform their processes at corresponding 3 to 45 application sites, before a displacement by at least 2 application sites takes place.

19. The method of at least one of preceding claims 1 to 16, wherein a plurality of units of the same type, in particular for steps i) to iii), are essentially positioned along a preferably straight line, and that a plurality of units of the same type, in particular for step iv), are essentially positioned along a second preferably straight line, wherein the units of the first and second line may essentially be positioned at equal distances or in an angled arrangement, so that a plurality of application sites with connecting elements protruding from a surface or with uneven connection sites, which are positioned two-dimensionally on a surface, such as a wing or fuselage of an aircraft, may be simultaneously processed or are processed, wherein in each case 2 to 15 units of the same type in both lines respectively simultaneously perform their processes at corresponding 2 to 15 application sites, before a displacement by corresponding 2 to 15 application sites on both lines to further lines takes place essentially in the direction of the lines or essentially perpendicularly thereto.

20. An automatic apparatus for performing the method of at least one of the preceding claims, wherein it has at least one station for at least one of steps i) to iv) and thus at least one nozzle element, whose inner space is indirectly or directly connected to a sealing compound reservoir and contains a mixed, uncured or at least partially uncured SCOD sealing compound, and - possibly separately - has at least one irradiation unit and wherein it has at least one unit for steps i) to iii) or at least one unit for steps i) to iv).

21. The apparatus according to claim 20, wherein it has an apparatus for forming sealing compound coatings for sealing of bolts, rivets, screws, welding seams or similar connecting elements or similar application sites in a linear and optionally also bendable or tiltable apparatus, in which a plurality of stations are series connected.

22. The apparatus according to at least one of claims 20 or 21, wherein the unit for steps i) to iii) or i) to iv) has elements for replacing nozzles, caps or/and tools, in which in case of a nozzle, cap or/and tool replacement, a change of nozzle shape, nozzle size, cap shape, cap size or/and tools is allowed
a) by rotating a turret with a plurality of such elements of different shape or/and size,
b) by moving a magazine with a plurality of such elements of different shape or/and size,
c) by removing, unscrewing, rotating off a bayonet lock, unsnapping of a previously used such element or release of a fast clamp apparatus or/and by connecting with or by engaging, screwing on, rotating on a bayonet lock, snapping in of such an element or connecting such an element of given shape or/and size over a fast clamp apparatus, or/and
d) by using at least one oblong nozzle element which is divided, in particular in a central portion, in the lengthwise direction, whose parts may be connected or separated by insertion, rotation, bayonet lock, snapping or fast clamps, in which the nozzle part to a sealing compound container, such as to a tank, is not replaced at each nozzle replacement, and in which the nozzle part with a nozzle extension or with a cap for forming the sealing compound coating or the sealing compound cap is replaced.

23. The apparatus according to at least one of claims 20 to 22, wherein the unit for or with step iv) has at least one irradiation unit for UV light or UV-VIS light.

24. The apparatus according to at least one of claims 20 to 23, wherein it comprises an element or a unit for the step of claim 3.

25. The apparatus according to claim 24, wherein it contains an apparatus for cleaning the nozzle element or a part thereof, for example by compressed air, in a way that the removed residues of sealing compound and residues of dirt are prevented from being blown or directed to the sealing compound coatings.

26. The use of the inventive method of at least one of claims 1 to 19 or/and of the inventive apparatus of at least one of claims 20 to 25 at or/and in an aerospace vehicle.

## Revendications

1. Procédé pour l'étanchéification, le revêtement et/ou le lissage aérodynamique d'au moins un élément de raccordement en saillie par rapport à une surface, avec une masse d'étanchéité contenant du soufre, procédé dans lequel le durcissement est déclenché « à la demande » avec un apport d'énergie - ci-après, appelée « masse d'étanchéité SCOD » - sur au moins un point d'application, en particulier sur un composant d'un aéronef et d'un engin spatial, avec au moins un élément de buse et au moins une unité d'irradiation, **caractérisé en ce que**
i) au moins un élément de buse, dont l'espace intérieur est directement ou indirectement relié à une réserve de masse d'étanchéité, c'est-à-dire à au moins un dispositif de mélange, à au moins un réservoir de masse d'étanchéité, à au moins une cartouche et/ou à au moins un magasin de cartouches, contient une masse d'étanchéité SCOD mélangée, non durcie ou au moins partiellement non durcie, qui est guidée et/ou retournée sur l'élément de raccordement en saillie par rapport à une surface, et ainsi est mise en contact avec la surface ou au voisinage de la surface,
ii) l'espace intérieur d'au moins un élément de buse est rempli de la masse d'étanchéité SCOD, constitué d'une réserve de masse d'étanchéité, telle que par exemple un réservoir, et est mis au moins approximativement en contact avec la surface, au moins au point que l'élément de raccordement en saillie par rapport à la surface - qui est désigné sous le nom de « point d'application » - soit entièrement revêtu de la masse d'étanchéité SCOD, la masse d'étanchéité SCOD formant un revêtement de masse d'étanchéité, pour l'essentiel sous forme d'une calotte de masse d'étanchéité d'un revêtement et/ou d'une surélévation en forme de colline,
iii) au moins un élément de buse ou au moins une partie d'au moins un élément de buse est, sur demande, décollé de la surface portant le revêtement de masse d'étanchéité, et
iv) le durcissement de la masse d'étanchéité SCOD est déclenché 1.) à l'aide d'au moins une unité d'irradiation par un apport d'énergie dans un revêtement de masse d'étanchéité, comme par exemple par exposition à un rayonnement de haute énergie, et 2.a) à cette occasion, ou de ce fait, par la libération d'un catalyseur latent, ou 2.b) à cette occasion, ou de ce fait, l'activation directe d'au moins un composant réactionnel est déclenchée, de sorte que la masse d'étanchéité SCOD mélangée va ensuite durcir et/ou subir un durcissement plus poussé,
dans lequel les étapes i) à iv) sont mises en œuvre à l'aide d'un dispositif automatique, au moins deux points d'application étant traités simultanément, ou traités simultanément en série.

2. Procédé selon la revendication 1, **caractérisé en ce que** la masse d'étanchéité SCOD, dans l'étape ii), provenant d'une réserve de masse d'étanchéité, comme par exemple un réservoir, est guidée et/ou pulvérisée sous pression sur l'élément de raccordement sous forme d'un cordon continu ou de portions de cordon.

3. Procédé selon au moins l'une des revendications 1 ou 2, **caractérisé en ce que** le revêtement de masse d'étanchéité non encore durci est, avant l'étape iv), formé et/ou lissé en surface à l'aide d'un outil et, dans l'étape ii) et/ou l'étape iii), est formé et/ou lissé en surface par un déplacement spatial, et en particulier linéaire et/ou rotatif, de l'élément de buse, avec rupture du cordon de masse d'étanchéité et/ou par déplacement d'un outil, pour recevoir sa forme finale.

4. Procédé selon au moins l'une des revendications précédentes, **caractérisé en ce que** le revêtement de masse d'étanchéité est pour l'essentiel mis sous une forme finale, qui a approximativement la forme d'un revêtement, d'une cloche, d'une calotte et/ou d'une surélévation en forme de colline sur la surface.

5. Procédé selon au moins l'une des revendications précédentes, **caractérisé en ce que** le revêtement de masse d'étanchéité est appliqué sur une surface nettoyée, qui dans la zone de la surface d'appui du revêtement de masse d'étanchéité comprend un promoteur d'adhérence.

6. Procédé selon au moins l'une des revendications précédentes, **caractérisé en ce que** l'apport d'énergie, dans l'étape iv), est réalisé par irradiation IR, irradiation NIR, irradiation par micro-ondes, irradiation VIS, irradiation UV-VIS, irradiation UV, irradiation aux ultrasons, irradiation aux électrons, irradiation gamma, irradiation bêta et/ou irradiation alpha.

7. Procédé selon au moins l'une des revendications précédentes, **caractérisé en ce que**, sur demande, comme par exemple dans le cas d'un remplacement lors d'une application sur ou entre des éléments de raccordement devant être étanchéifiés, et ayant des formes différentes, on procède à un remplacement d'au moins un élément de buse ou d'au moins une partie d'un élément de buse, tel qu'une calotte, une buse, une gaine de raccordement et/ou un élément de raccordement à une réserve de masse d'étanchéité, comme par exemple un réservoir.

8. Procédé selon au moins l'une des revendications précédentes, **caractérisé en ce que** l'élément de buse (0) est pour l'essentiel constitué d'un élément de raccordement (1) à une réserve de masse d'étanchéité, comme par exemple un réservoir, d'une gaine de raccordement (2) et éventuellement aussi d'une buse, d'une calotte et/ou d'un outil (3) et/ou d'un jeu de buses au niveau de la gaine de raccordement (2), l'élément de buse (0) pouvant être constitué d'une partie ou de plusieurs parties.

9. Procédé selon la revendication 8, **caractérisé en ce que** la gaine de raccordement (2) est pour l'essentiel tubulaire et éventuellement souple et/ou flexible.

10. Procédé selon au moins l'une des revendications précédentes, **caractérisé en ce que** la masse d'étanchéité SCOD mélangée, non durcie ou au moins partiellement non durcie,
A) ou bien est une telle masse à base d'une masse de base comportant un polymère de base à terminaison mercapto à base d'un polythioéther, d'un polysulfure, de leurs copolymères et/ou de leurs mélanges, d'au moins un durcisseur contenant un isocyanate ayant une fonctionnalité moyenne dans la plage de 1,5 à 3,2, ainsi que d'au moins une base photolatente à base d'α-aminocétone,
B) ou bien est une telle masse à base d'une masse de base comportant un polythioéther à terminaison mercapto, un durcisseur à base d'époxy et au moins une base photolatente à base d'une amine tertiaire à empêchement stérique et/ou à base d'amidine à empêchement stérique, ces bases photolatentes agissant comme des catalyseurs latents, ou
C) au moins est une telle masse à base d'un polythioéther à terminaison mercapto comportant un polyène ayant une liaison polyvinyléther et/ou polyallyle et à base d'un photoamorceur de préférence choisi dans le groupe consistant en les acétophénones, les α-aminoalkylphénones, les benzoïnéthers, les benzoyloxymes, les oxydes d'acylphosphine, les oxydes de bisacylphosphine, les benzophénones, les cétones de Michler, les thioxanthones, les anthraquinones, les camphoquinones, les fluorones et les cétocoumarines,
la masse d'étanchéité SCOD mélangée, non durcie ou au moins partiellement non durcie, pouvant commencer à durcir sous l'effet d'un apport d'énergie, comme par exemple une irradiation UV.

11. Procédé selon la revendication 10, **caractérisé en ce que** l'au moins un photoamorceur en particulier pour le type C, ou l'au moins une base photolatente, en particulier pour le type A ou B, sous l'action d'un rayonnement actinique de haute énergie appliqué sur une masse d'étanchéité SCOD en particulier du type A) ou du type B), dissocie au moins une molécule à base d'une amine tertiaire et/ou d'amidine, qui peut amorcer en tant que catalyseur actif le durcissement de la masse d'étanchéité SCOD, et **en ce que** la masse d'étanchéité SCOD au moins partiellement non durcie n'a pas besoin d'une irradiation supplémentaire après l'action en particulier d'un rayonnement actinique de haute énergie, et subit un durcissement supplémentaire dans la plage de températures de -10 à +70 °C.

12. Procédé selon au moins l'une des revendications précédentes, **caractérisé en ce que** l'étape selon la revendication 3 est mise en œuvre avec un dispositif automatique.

13. Procédé selon au moins l'une des revendications précédentes, **caractérisé en ce qu'**un dispositif automatique destiné à mettre en œuvre le procédé, ou au moins l'une de ses unités, subit un déplacement automatisé à partir du point d'application traité, après mise en œuvre des passes d'au moins une étape selon la revendication 1, de telle sorte qu'il arrive sur un point d'application suivant, avec un élément de raccordement en saillie par rapport à la surface, et y exécute les passes.

14. Procédé selon au moins l'une des revendications précédentes, **caractérisé en ce qu'**au moins une unité du dispositif automatique destinée à la mise en œuvre du procédé selon la revendication 1 exécute les étapes i) à iii), tandis qu'au moins une autre unité exécute l'étape iv).

15. Procédé selon au moins l'une des revendications 1 à 13, **caractérisé en ce qu'**au moins une unité du dispositif automatique pour la mise en œuvre du procédé selon la revendication 1 exécute les étapes i) à iii), tandis que simultanément au moins une autre unité exécute l'étape iv).

16. Procédé selon au moins l'une des revendications précédentes, **caractérisé en ce que** toutes les étapes i) à iv) sont exécutées avant que l'au moins une unité du dispositif automatique pour la mise en œuvre du procédé selon la revendication 1 pour les étapes i) à iii) et l'au moins une autre unité pour l'étape iv), ou la totalité du dispositif automatique, soient, après exécution des passes, simultanément déplacés vers le point d'application suivant.

17. Procédé selon au moins l'une des revendications précédentes, **caractérisé en ce que** le déplacement d'unités ou de la totalité du dispositif est réalisé de telle sorte que, sur au moins un point d'application comportant un élément de raccordement en saillie par rapport à la surface, ou sur au moins un point de raccordement non plan, qui est disposé dans un plan ou une face perpendiculairement à la surface, et pour l'essentiel sont disposés d'une manière monodimensionnelle, les différentes passes soient effectuées les unes après les autres pour un point d'application et, dans chaque cas, 1 à 15 unités équivalentes exécutent simultanément leurs passes sur les points d'application correspondants 1 à 15, avant que se produise un déplacement correspondant aux 1 à 15 points d'application correspondants.

18. Procédé selon au moins l'une des revendications précédentes 1 à 16, **caractérisé en ce que** le déplacement d'unités ou de la totalité du dispositif est réalisé de telle sorte que, au moins sur un point d'application comportant un élément de raccordement en saillie par rapport à une surface, ou sur au moins un point de raccordement non plan, qui sont disposés dans un plan ou une face perpendiculairement à la surface et pour l'essentiel sont disposés d'une manière monodimensionnelle, les différentes passes pour un point d'application soient exécutées les unes après les autres, différentes unités étant disposées en alternance dans le plan ou la face, dans chaque cas, 1 à 45 unités différentes exécutant chacune simultanément leurs passes sur 3 à 45 points d'application correspondants, avant qu'un déplacement ait lieu, d'au moins 2 points d'application.

19. Procédé selon au moins l'une des revendications précédentes 1 à 16, **caractérisé en ce que** plusieurs unités équivalentes sont disposées, en particulier pour les étapes i) à iii), pour l'essentiel sur une ligne de préférence droite, et que plusieurs unités équivalentes, en particulier pour l'étape iv), sont disposées pour l'essentiel sur une deuxième ligne de préférence droite, auquel cas les unités de la première à la deuxième ligne peuvent être disposées à des distances pour l'essentiel identiques, ou faisant un angle avec elles, de sorte que plusieurs points d'application, comportant des éléments de raccordement en saillie par rapport à une surface, ou comportant des points de raccordement non plans, qui sont disposés d'une manière bidimensionnelle sur une surface comme par exemple une aile ou un fuselage d'un aéronef, puisent être traités ou soient traités simultanément et, dans chaque cas, 2 à 15 unités équivalentes exécutent simultanément sur les deux lignes leurs passes sur 2 à 15 points d'application correspondants, avant qu'un déplacement correspondant à 2 à 15 points d'application ait lieu sur les deux lignes, pour l'essentiel dans la direction des lignes ou pour l'essentiel perpendiculairement à ces dernières, pour arriver à d'autres lignes.

20. Dispositif automatique pour la mise en œuvre du procédé selon au moins l'une des revendications précédentes, **caractérisé en ce qu'**il comprend au moins une station pour au moins l'une des étapes i) à iv) et alors au moins un élément de buse, dont l'espace intérieur est directement ou indirectement relié à une réserve de masse d'étanchéité, et qui contient une masse d'étanchéité SCOD mélangée, non durcie ou au moins partiellement non durcie, et - éventuellement d'une manière séparée - au moins une unité d'irradiation, et **en ce qu'**il comprend au moins une unité pour les étapes i) à iii) ou au moins une unité pour les étapes i) à iv) .

21. Dispositif selon la revendication 20, **caractérisé en ce qu'**il comprend un équipement pour réaliser des revêtements de masse d'étanchéité, en tant qu'étanchéité de boulons, d'écrous, de vissages, de points de soudure ou d'éléments de raccordement analogues, ou de points d'application analogues, dans un équipement linéaire, éventuellement aussi angulaire ou pivotant, dans lequel plusieurs stations sont montées en série.

22. Dispositif selon au moins l'une des revendications 20 ou 21, **caractérisé en ce que** l'unité présente, pour les étapes i) à iii) ou i) à iv), des éléments pour le remplacement des buses, des calottes et/ou des outils, dans lesquels, en cas de remplacement d'une buse, d'une calotte et/ou d'un outil, il est possible de procéder à un remplacement de la forme des buses, de la taille des buses, de la forme des calottes, de la taille des calottes et/ou des outils,
a) par rotation d'une tourelle comportant plusieurs éléments de ce type, ayant des formes et/ou des tailles différentes,
b) par déplacement d'un magasin comportant plusieurs éléments de ce type, ayant des formes et/ou des tailles différentes,
c) par dépose, dévissage, détachement par torsion d'un emboîtement à baïonnette, désencliquetages d'un élément de ce type précédemment utilisé, ou desserrage d'un dispositif de serrage rapide et/ou par assemblage avec ou par enfichage, vissage, rotation d'un emboîtement à baïonnette, encliquetage d'un élément de ce type ou assemblage d'un élément de ce type ayant une certaine forme et/ou une certaine taille, par l'intermédiaire d'un dispositif de serrage rapide, et/ou
d) par utilisation d'au moins un élément de buse longitudinal, et subdivisé sur toute sa longueur en particulier dans une section centrale, dont les parties peuvent être assemblées ou désassemblées par une technique d'enfichage, de rotation, d'emboîtement à baïonnette, d'encliquetage ou de serrage rapide, où la partie de buse n'est pas remplacée à chaque remplacement de buse par une réserve de masse d'étanchéité, comme par exemple un réservoir, et où la partie de buse est remplacée par une saillie de buse ou une calotte, pour réaliser le revêtement de masse d'étanchéité ou la calotte de masse d'étanchéité.

23. Dispositif selon au moins l'une des revendications 20 à 22, **caractérisé en ce que** l'unité, pour ou avec l'étape iv), comprend au moins une unité d'irradiation d'une lumière UV ou UV-VIS.

24. Dispositif selon au moins l'une des revendications 20 à 23, **caractérisé en ce qu'**il comprend un élément ou une unité pour l'étape selon la revendication 3.

25. Dispositif selon la revendication 24, **caractérisé en ce qu'**il contient un équipement pour nettoyer l'élément de buse ou l'une de ses parties, par exemple à l'aide d'air comprimé, de telle sorte que les résidus de masse d'étanchéité et les résidus de saleté éliminés ne soient pas soufflés ou dirigés sur les revêtements de masse d'étanchéité.

26. Utilisation du procédé selon l'invention selon au moins l'une des revendications 1 à 19 et/ou dispositif selon l'invention selon au moins l'une des revendications 20 à 25, sur et/ou dans un aéronef ou un engin spatial.
